# EUROPEAN PATENT SPECIFICATION

(11) **EP 3 178 784 B1**
(45) Date of publication and mention of the grant of the patent: **10.10.2018**
(21) Application number: 15828921.5
(22) Date of filing: 04.08.2015
(51) Int. Cl.: C01B 3/38, H01M 8/04, H01M 8/0656, H01M 8/0612

(54) **HYDROGEN GENERATION APPARATUS, OPERATION METHOD THEREOF, AND FUEL CELL SYSTEM**
WASSERSTOFFERZEUGUNGSVORRICHTUNG, BETRIEBSVERFAHREN DAFÜR UND BRENNSTOFFZELLENSYSTEM
APPAREIL DE GÉNÉRATION D'HYDROGÈNE, SON PROCÉDÉ DE FONCTIONNEMENT ET SYSTÈME DE PILE À COMBUSTIBLE

(30) Priority: 04.08.2014 JP 2014158315
(43) Date of publication of application: 14.06.2017
(73) Proprietor: Panasonic Intellectual Property Management Co., Ltd., Osaka-shi, Osaka 540-6207 (JP)
(72) Inventor: TAMURA, Yoshio, Osaka-shi Osaka 540-6207 (JP); TANIYAMA, Akiko, Osaka-shi Osaka 540-6207 (JP); OZEKI, Masataka, Osaka-shi Osaka 540-6207 (JP)
(74) Representative: Grünecker Patent- und Rechtsanwälte PartG mbB
(86) International application number: PCT/JP2015/003912
(87) International publication number: WO 2016/021182

(56) References cited:
- EP-A1- 2 813 466
- WO-A1-2013/128785
- JP-A- 2009 087 568
- JP-A- 2014 139 125
- US-A- 3 655 448
- US-A1- 2014 057 185

## Description

### TECHNICAL FIELD

The present invention relates to a hydrogen generation apparatus that includes a hydro-desulfurizer, a method of driving the same, and a fuel cell system.

### BACKGROUND ART

A hydrogen-containing gas, which is used as a fuel during power generation, is not sufficiently serviced by a typical feedstock infrastructure, and thus the fuel cell system typically includes the hydrogen generation apparatus that includes a reformer that generates the hydrogen-containing gas from natural gas, an LPG, and the like which are typical feedstock infrastructures.

In the reformer, a water vapor reforming reaction is typically used. In the water vapor reforming reaction, for example, city gas and water vapor, which become feedstock, are allowed to react with each other at a high temperature of approximately 600°C to 700°C by using a noble metal-based reforming catalyst such as a Ni-based reforming catalyst and a Ru-based reforming catalyst. According to the reaction, a hydrogen-containing gas, which contains hydrogen as a main component, is generated.

However, a sulfur compound is contained in the feedstock gas such as the city gas, and the sulfur compound is a material that is poisonous to, particularly, a reforming catalyst and a fuel cell stack catalyst, and thus it is necessary to remove the sulfur compound by any method.

As a method of removing the sulfur compound, there is known a hydrogen generation apparatus in which the hydrogen-containing gas and the feedstock gas are mixed with each other, and the sulfur compound is removed with a hydro-desulfurization catalyst through hydro-desulfurization. As a method of supplying the hydrogen-containing gas, a method (hereinafter, referred to as recycle) of returning a hydrogen-containing gas, which is generated by a reforming catalyst, to a supply path of a feedstock gas is typically used.

There is suggested a hydrogen generation apparatus in which a temperature detector is provided to a recycle gas flow path for recycle of the hydrogen-containing gas, and clogging abnormality of the recycle gas flow path is detected by the temperature detector (for example, refer to PTL 1 and PTL 2).

However, in the hydrogen generation apparatus that is disclosed in PTL 1 and PTL 2, a temperature variation in the recycle gas flow path due to a variation of an environmental temperature and a variation of a feedstock gas flow rate is great, and thus it is difficult to detect the clogging of the recycle gas flow path.

That is, a temperature of a recycle gas that flows through the recycle gas flow path varies due to an effect of a variation of the amount of the hydrogen-containing gas that is generated in the hydrogen generation apparatus, and a variation of an ambient temperature of the hydrogen generation apparatus. According to this, even when trying to detect the clogging of the recycle gas flow path by using the temperature of the recycle gas, the variation of the temperature occurs, and thus there is a possibility that erroneous detection may be made.

### Citation List

### Patent Literature

PTL 1: JPH 10-92452 A
PTL 2: JP 2013-212961 A

US 3655448 A discloses a hydrogen generation apparatus according to paragraph [0005] above.

### SUMMARY OF THE INVENTION

The present invention has been made in consideration of the above-described problems, and an object thereof is to provide a hydrogen generation apparatus capable of detecting abnormality when a hydrogen-containing gas is not normally supplied to a hydro-desulfurizer through a recycle gas flow path due to clogging of a recycle gas flow path and the like.

That is, there is provided a hydrogen generation apparatus according to claim 1.

According to this configuration, it is possible to detect abnormality when the hydrogen-containing gas is not normally supplied to the hydro-desulfurizer through the recycle gas flow path. According to this, it is possible to prevent a hydro-desulfurization catalyst of a hydro-desulfurization section from deteriorating, or it is possible to prevent a sulfur compound in the feedstock gas from being supplied to the reformer without being removed. A fuel cell system according to the invention is defined in claim 9. A method of driving a hydrogen generation apparatus according to the invention is defined in claim 10. Further advantageous embodiments are defined in the dependent claims.

### BRIEF DESCRIPTION OF DRAWINGS

FIG. 1 is a conceptual diagram illustrating an example of a schematic configuration of a hydrogen generation apparatus in a first exemplary embodiment of the invention.
FIG. 2 is a flowchart illustrating an example of a method of driving the hydrogen generation apparatus in the first exemplary embodiment of the invention.
FIG. 3 is a flowchart illustrating an example of the method of driving the hydrogen generation apparatus in the first exemplary embodiment of the invention.
FIG. 4 is a flowchart illustrating an example of a method of driving a hydrogen generation apparatus in a first modification example of a second exemplary embodiment of the invention.
FIG. 5 is a flowchart illustrating an example of a method of driving a hydrogen generation apparatus in a third exemplary embodiment of the invention.
FIG. 6 is a flowchart illustrating an example of a method of driving a hydrogen generation apparatus in a first modification example of a third exemplary embodiment of the invention.
FIG. 7 is a flowchart illustrating an example of a method of driving a hydrogen generation apparatus in a fourth exemplary embodiment of the invention.
FIG. 8A is a conceptual diagram illustrating a detected pressure value of a pressure detection unit and a state of the hydrogen generation apparatus in a state in which an on-off valve of the hydrogen generation apparatus in the fourth exemplary embodiment of the invention is opened.
FIG. 8B is a conceptual diagram illustrating a detected pressure value of the pressure detection unit and a state of the hydrogen generation apparatus in a state in which the on-off valve of the hydrogen generation apparatus in the fourth exemplary embodiment of the invention is closed.
FIG. 9 is a conceptual diagram illustrating an example of a schematic configuration of a fuel cell system in a fifth exemplary embodiment of the invention.
FIG. 10 is a conceptual diagram illustrating an example of a schematic configuration of a hydrogen generation apparatus in a sixth exemplary embodiment of the invention.
FIG. 11 is a conceptual diagram illustrating an example of a schematic configuration of a hydrogen generation apparatus in a seventh exemplary embodiment of the invention.

### DESCRIPTION OF EMBODIMENTS

### (First Exemplary Embodiment)

### [Configuration of Apparatus]

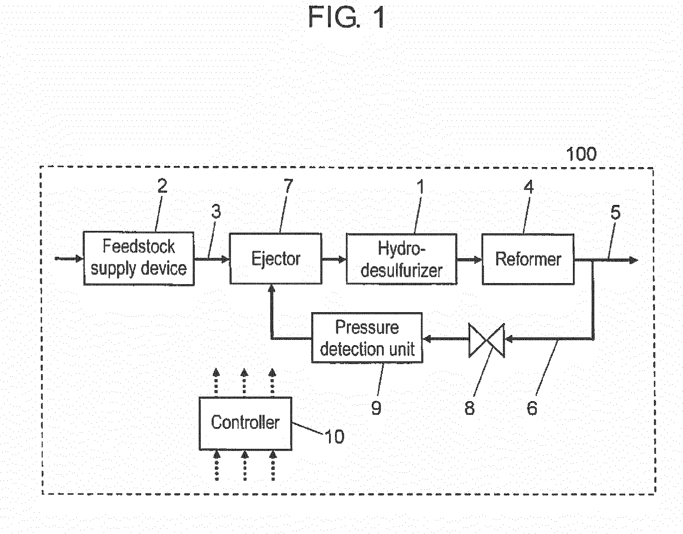

FIG. 1 is a conceptual diagram illustrating an example of a schematic configuration of hydrogen generation apparatus 100 in a first exemplary embodiment of the invention.

In the example illustrated in Fig. 1, hydrogen generation apparatus 100 in this exemplary embodiment includes hydro-desulfurizer 1, feedstock supply device 2, feedstock supply flow path 3, reformer 4, hydrogen-containing gas flow path 5, recycle gas flow path 6, ejector 7, on-off valve 8, and an abnormality detection unit. The abnormality detection unit includes pressure detection unit 9 and controller 10.

Hydro-desulfurizer 1 removes a sulfur compound in a feedstock gas that is supplied to reformer 4. Hydro-desulfurizer 1 is constituted by filling a vessel with a desulfurizing agent for hydro-desulfurization. For example, the desulfurizing agent for hydro-desulfurization is constituted by a CoMo-based catalyst that converts the sulfur compound in the feedstock into a hydrogen sulfide, and a ZnO-based catalyst or a CuZn-based catalyst which is a sulfur adsorbent that adsorbs and removes the hydrogen sulfide.

The desulfurizing agent for hydro-desulfurization is not limited thereto, and may be constituted by only the CuZn-based catalyst having both a function of converting the sulfur compound to the hydrogen sulfide and a function of adsorbing the hydrogen sulfide.

In addition, hydro-desulfurizer 1 causes the sulfur compound in the feedstock gas to react with the hydrogen-containing gas so as to convert the sulfur compound into the hydrogen sulfide, and then adsorbs and removes the hydrogen sulfide. In addition, even when the hydrogen-containing gas does not exist, hydro-desulfurizer 1 can directly and physically adsorb the sulfur compound in the feedstock gas (hereinafter, simply referred to as "physical adsorption").

However, in a case of physically adsorbing the sulfur compound in the feedstock gas, a large amount of desulfurizing agent for hydro-desulfurization is necessary in comparison to the case where the sulfur compound in the feedstock gas is allowed to react with the hydrogen-containing gas for conversion into the hydrogen sulfide, and then the hydrogen sulfide is adsorbed and removed (hereinafter, referred to as "adsorptive removal by the hydrogen sulfide"). According to this, in typical usage, absorptive removal by the hydrogen sulfide is typical. In addition, in this exemplary embodiment, the physical adsorption is used with limitation to activation, stoppage of hydrogen generation apparatus 100, and the like as timing at which the hydrogen-containing gas is not generated.

Feedstock supply device 2 is a device that adjusts a flow rate of the feedstock gas that is supplied to hydro-desulfurizer 1. For example, feedstock supply device 2 is constituted by a pressure raising device and a flow rate adjusting valve, but may be constituted by any one of the pressure raising device and the flow rate adjusting valve. For example, as the pressure raising device, a constant volume type pump is used, but there is no limitation thereto. The feedstock gas is supplied from a feedstock supply source. Examples of the feedstock supply source include a feedstock gas cylinder, a feedstock gas infrastructure, and the like, and a predetermined supply pressure is set thereto.

Feedstock supply flow path 3 is a flow path through which the feedstock gas, of which a pressure is raised by feedstock supply device 2, is supplied to hydro-desulfurizer 1, and is constituted by a pipeline that connects feedstock supply device 2 and hydro-desulfurizer 1, and the like. Feedstock supply flow path 3 may have any configuration as long as the feedstock gas is allowed to flow between feedstock supply device 2 and hydro-desulfurizer 1.

Reformer 4 generates the hydrogen-containing gas by using the feedstock gas from which the sulfur compound is removed in hydro-desulfurizer 1. Specifically, the feedstock gas is subjected to a reforming reaction at a reforming catalyst section (not illustrated) inside reformer 4, and thus the hydrogen-containing gas is generated. Examples of the reforming reaction include a water vapor reforming reaction, an auto-thermal reaction, a partial oxidation reaction, and the like.

Although not illustrated in FIG. 1, devices necessary for each reforming reaction are appropriately provided. For example, in a case where the reforming reaction is the water vapor reforming reaction, a combustor that heats the reforming catalyst section, an evaporator that generates water vapor, and a water supply device that supplies water to the evaporator are provided.

In a case where the reforming reaction is the auto-thermal reaction, an air supply device (not illustrated) that supplies air to reformer 4 is additionally provided to hydrogen generation apparatus 100. Examples of the feedstock gas that is used include an organic compound, which is composed of at least carbon and hydrogen, such as city gas and natural gas which contain methane as a main component, and LPG.

Hydrogen-containing gas flow path 5 is a flow path through which the hydrogen-containing gas generated in reformer 4 is discharged from reformer 4. The hydrogen-containing gas passes through hydrogen-containing gas flow path 5 and is supplied to a device that uses the hydrogen-containing gas, and the like. Examples of the device that uses the hydrogen-containing gas include a fuel cell and the like.

Recycle gas flow path 6 is a flow path through which a part of the hydrogen-containing gas, which is transmitted through hydrogen-containing gas flow path 5 from reformer 4, is supplied to feedstock supply flow path 3. Hydrogen-containing gas flow path 5 is diverged, and thus a part of the hydrogen-containing gas is transmitted to feedstock supply flow path 3, and the feedstock gas and the hydrogen-containing gas are mixed therein.

An upstream end of recycle gas flow path 6 may be connected to any site as long as the site is a flow path through which the hydrogen-containing gas transmitted from reformer 4 flows.

For example, in a case where a CO reducing device, which reduces carbon monoxide in the hydrogen-containing gas, is provided downstream of reformer 4, the upstream end of recycle gas flow path 6 may be connected to a flow path between reformer 4 and the CO reducing device, the CO reducing device, or a downstream side of the CO reducing device.

In addition, in a case where the CO reducing device is provided with a modifier that reduces carbon monoxide through a shift reaction, and a CO remover that reduces carbon monoxide through any one of an oxidation reaction and a methanation reaction, the upstream end of recycle gas flow path 6 may be configured to be connected to a flow path between the modifier and the CO remover. In addition, the upstream end of recycle gas flow path 6 may be connected to a flow path downstream of a hydrogen using device in which the hydrogen-containing gas is used.

In addition, it is not necessary for hydrogen generation apparatus 100 to include the CO reducing device and the CO remover, and the CO reducing device and the CO remover may not be provided as long as performance necessary for a device, which uses a gas generated in hydrogen generation apparatus 100, is exhibited.

Ejector 7 is disposed at a joint portion between feedstock supply flow path 3 and recycle gas flow path 6. Ejector 7 is a device that increases a flow velocity by narrowing a cross-sectional area of a flow path, through which the feedstock gas pumped by feedstock supply device 2 such as the pressure raising device flows, in order for recycle gas flow path 6 to be joined to feedstock supply flow path 3 at a position in which the flow rate of the feedstock gas becomes the maximum.

When the flow velocity is increased, it is possible to reduce a pressure of the feedstock gas at the position, in which the flow velocity of the feedstock gas becomes the maximum, with the Venturi effect. At the position in which the flow velocity of the feedstock gas becomes the maximum, the pressure of the feedstock gas is mostly reduced. The pressure is designed to be lower than a pressure on an upstream side of recycle gas flow path 6, and thus it is possible to allow the hydrogen-containing gas to flow into feedstock supply flow path 3 through recycle gas flow path 6.

In addition, in a case where it is possible to allow the hydrogen-containing gas to flow into feedstock supply flow path 3 due to the Venturi effect, it is not necessary for the hydrogen-containing gas to be allowed to flow in at a position in which the flow velocity of the feedstock gas becomes the maximum.

On-off valve 8 is provided to recycle gas flow path 6. Flowing of the hydrogen-containing gas inside recycle gas flow path 6 is stopped by closing on-off valve 8, and the flowing of the hydrogen-containing gas inside recycle gas flow path 6 is initiated by opening on-off valve 8.

On-off valve 8 may be configured to be driven by electric power similar to an electromagnetic valve, or may be configured to be driven by gas pressure. On-off valve 8 may have any configuration as long as on-off valve 8 can close and open a gas passage inside recycle gas flow path 6.

In this exemplary embodiment, as described above, the abnormality detection unit includes pressure detection unit 9 and controller 10.

Pressure detection unit 9 detects a pressure of recycle gas flow path 6 downstream of on-off valve 8. Pressure detection unit 9 may have any configuration as long as pressure detection unit 9 can detect a pressure.

Controller 10 operates feedstock supply device 2 and on-off valve 8, confirms a state of on-off valve 8, or detects a pressure value by using pressure detection unit 9. In addition, controller 10 performs control such as control of making a determination as abnormality, control of giving a notification of a state or abnormality of hydrogen generation apparatus 100, control of stopping driving of the hydrogen generation apparatus, and control of prohibiting the subsequent activation in accordance with a pressure value that is detected by pressure detection unit 9.

Controller 10 may perform any one or more among a plurality of kinds of the control, and is not limited to combinations described in this exemplary embodiment as long as the above-described control function is provided. In this exemplary embodiment, controller 10 includes a calculation processing unit (not illustrated) and a storage unit (not illustrated) that stores a control program.

As the calculation processing unit, for example, an MPU, a CPU, and the like are used. As the storage unit, for example, a memory is used. Controller 10 may be constituted by single controller 10 that performs centralized control, or a plurality of controllers 10 which perform decentralized control in cooperation with each other.

### [Operation]

Hereinafter, description will be given of an operation of hydrogen generation apparatus 100 with reference to FIG. 1.

When generating the hydrogen-containing gas, hydrogen generation apparatus 100 performs the following operation. Specifically, the feedstock gas is supplied to hydro-desulfurizer 1 through feedstock supply flow path 3 by feedstock supply device 2 so as to remove the sulfur compound. The feedstock gas, from which the sulfur compound is removed, is supplied to reformer 4 so as to generate the hydrogen-containing gas. The hydrogen-containing gas, which is generated in reformer 4, is discharged from reformer 4 through hydrogen-containing gas flow path 5.

A part of the hydrogen-containing gas, which is discharged through hydrogen-containing gas flow path 5, is suctioned at ejector 7 due to the Venturi effect through recycle gas flow path 6. The hydrogen-containing gas that is suctioned and the feedstock gas are mixed with each other, and the resultant mixed gas is supplied to hydro-desulfurizer 1.

In ejector 7, a flow path cross-sectional area of a circulation passage of the feedstock gas is configured to be gradually narrowed, and a flow path cross-sectional area of a flowing passage, through which a mixed gas of the feedstock gas and a recycle gas circulates, is configured to be gradually enlarged.

According to this configuration, the flow velocity of the feedstock gas becomes the fastest at a joint portion between the feedstock gas and the recycle gas, and thus the pressure of the feedstock gas becomes the lowest. A flow path cross-sectional area is designed in order for the pressure of the feedstock gas at this time to be less than a pressure on an upstream side of recycle gas flow path 6, and thus it is possible to draw the recycle gas into a feedstock passage.

When the hydrogen-containing gas is supplied to hydro-desulfurizer 1, the sulfur compound and hydrogen react with each other in hydro-desulfurizer 1 to generate a hydrogen sulfide, and the hydrogen sulfide is adsorbed and removed with the hydro-desulfurization catalyst. In this exemplary embodiment, the sulfur compound is physically adsorbed and removed in hydro-desulfurizer 1 before the hydrogen-containing gas is supplied to hydro-desulfurizer 1.

In addition, hydro-desulfurizer 1 can physically adsorb and remove the sulfur compound. However, when the sulfur compound is physically adsorbed and removed, a load on the hydro-desulfurization catalyst, which is included in hydro-desulfurizer 1, is greater in comparison to a case of removing the sulfur compound by using the hydrogen-containing gas, and thus the catalyst life becomes shorter. According to this, it is possible to employ a configuration in which the sulfur compound in the feedstock gas is removed by an adsorbent desulfurizer (not illustrated) that is additionally provided before the hydrogen-containing gas is supplied to hydro-desulfurizer 1.

Here, the hydrogen-containing gas is supplied to hydro-desulfurizer 1 through recycle gas flow path 6 during generation of the hydrogen-containing gas in hydrogen generation apparatus 100, and thus it is possible to remove the sulfur compound by using the hydrogen-containing gas in hydro-desulfurizer 1. However, in a case where the hydrogen-containing gas is not normally supplied to hydro-desulfurizer 1 through recycle gas flow path 6, physical adsorptive removal of the sulfur compound is performed in hydro-desulfurizer 1. In this case, the hydro-desulfurization catalyst, which is included in hydro-desulfurizer 1, more rapidly deteriorates in comparison to deterioration that is assumed, and thus hydro-desulfurizer 1 does not function. As a result, there is a possibility that reformer 4 and a device, which uses the hydrogen-containing gas generated in hydrogen generation apparatus 100, may deteriorate.

So as to prevent the above-described situation from occurring, whether or not the hydrogen-containing gas is normally supplied to hydro-desulfurizer 1 through recycle gas flow path 6 is confirmed by using on-off valve 8 and pressure detection unit 9.

Next, description will be given of a driving method of confirming whether or not the hydrogen-containing gas is supplied to hydro-desulfurizer 1 in hydrogen generation apparatus 100.

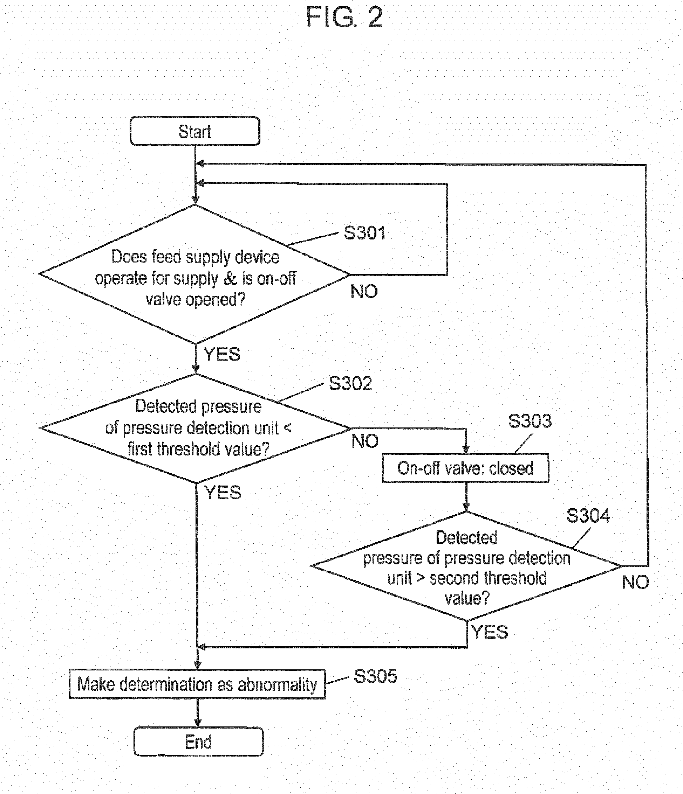

FIG. 2 is a flowchart illustrating an example of a method of driving hydrogen generation apparatus 100 in the first exemplary embodiment of the invention. During generation of the hydrogen-containing gas in reformer 4, hydrogen generation apparatus 100 causes the hydrogen-containing gas to continuously flow through recycle gas flow path 6 in a state in which on-off valve 8 is opened.

During detection of whether or not the hydrogen-containing gas normally flows through recycle gas flow path 6, whether or not abnormality occurs is detected on the basis of a pressure value that is detected by pressure detection unit 9 of the abnormality detection unit during opening of on-off valve 8, and a pressure value that is detected by pressure detection unit 9 of the abnormality detection unit during closing of on-off valve 8.

In a state in which the hydrogen-containing gas normally flows through recycle gas flow path 6, the pressure value, which is detected by pressure detection unit 9 of the abnormality detection unit during opening of on-off valve 8, is approximately the same as a pressure value at a portion (hereinafter, referred to as "diverging portion") in which recycle gas flow path 6 diverges from hydrogen-containing gas flow path 5, or shows a pressure value in which a pressure drop occurs in accordance with flow path resistance of recycle gas flow path 6 from the diverging portion to pressure detection unit 9.

In this exemplary embodiment, the flow path resistance of recycle gas flow path 6 from the diverging portion to pressure detection unit 9 of the abnormality detection unit is very small, and the diverging portion is provided downstream of reformer 4, and thus pressure detection unit 9 of the abnormality detection unit shows approximately the same pressure value as a pressure value on a downstream side of reformer 4.

In a normal state (a state in which the hydrogen-containing gas normally flows through recycle gas flow path 6), a pressure, which is detected by pressure detection unit 9 of the abnormality detection unit during opening of on-off valve 8, is equal to or greater than a first threshold value. The pressure value, which is detected by pressure detection unit 9 of the abnormality detection unit during a normal state, is different depending on an apparatus configuration, and thus the first threshold value may be a value which can be determined as normal in the apparatus configuration, and may be set in an arbitrary manner in accordance with the apparatus configuration.

In addition, in a state in which the hydrogen-containing gas can normally flow through recycle gas flow path 6, when on-off valve 8 is switched to a closed state from an opened state, suction due to the Venturi effect of ejector 7 occurs in recycle gas flow path 6 ranging from on-off valve 8 to ejector 7, and thus the pressure, which is detected by pressure detection unit 9 of the abnormality detection unit, greatly decreases in comparison to a case where on-off valve 8 is opened.

The pressure, which is detected by pressure detection unit 9 of the abnormality detection unit in the normal state during closing of on-off valve 8, is equal to or less than a second threshold value. The pressure is different depending on characteristics of ejector 7. According to this, the second threshold value may be a value which can be determined as normal in the apparatus configuration, and may be set in an arbitrary manner in consideration of the characteristics of ejector 7.

Here, as a cause for the occurrence of abnormality in which the recycle gas does not normally flow through recycle gas flow path 6, the following situations are considered.

Specifically, clogging abnormality in recycle gas flow path 6 upstream of pressure detection unit 9, closing abnormality in which on-off valve 8 is kept closed and is not opened, opening abnormality in which on-off valve 8 is kept opened and is not closed, clogging abnormality of recycle gas flow path 6 between ejector 7 and pressure detection unit 9, abnormality of ejector 7, and the like are considered.

Examples of the abnormality of ejector 7 include clogging abnormality of a flow path (not illustrated) through which the hydrogen-containing gas is introduced into ejector 7, clogging abnormality of a flow path (not illustrated) through which a feedstock gas flows at the inside of ejector 7, a decrease in a hydrogen-containing gas suction force of ejector 7 due to deformation, and the like.

Here, description will be given of a relationship between a state of on-off valve 8 and a detected pressure value of pressure detection unit 9 of the abnormality detection unit in a case where abnormality occurs.

When clogging abnormality occurs in recycle gas flow path 6 upstream of pressure detection unit 9 of the abnormality detection unit, even in a state in which on-off valve 8 is opened, a space ranging from a portion in which clogging occurs, to ejector 7 is suctioned due to the Venturi effect of ejector 7, and thus the detected pressure of pressure detection unit 9 of the abnormality detection unit decreases further than the first threshold value. According to this, it is possible to detect the abnormality.

Next, when the closing abnormality, in which on-off valve 8 is kept closed and is not opened, occurs, even when controller 10 controls on-off valve 8 to an opened state, on-off valve 8 is closed. According to this, a space ranging from on-off valve 8 to ejector 7 is suctioned due to the Venturi effect of ejector 7, and the detected pressure of pressure detection unit 9 of the abnormality detection unit is apt to decrease further than the first threshold value. According to this, it is possible to detect the abnormality.

Next, when the opening abnormality, in which on-off valve 8 is kept opened and is not closed, occurs, even when controller 10 controls on-off valve 8 to a closed state, on-off valve 8 is opened. According to this, pressure detection unit 9 of the abnormality detection unit communicates with the diverging portion between hydrogen-containing gas flow path 5 and recycle gas flow path 6, and the detected pressure of pressure detection unit 9 of the abnormality detection unit becomes approximately the same as a pressure on a downstream side of reformer 4 in hydrogen-containing gas flow path 5, and thus the detected pressure is greater than the second threshold value. According to this, it is possible to detect the abnormality.

Next, when the clogging abnormality of recycle gas flow path 6 between ejector 7 and pressure detection unit 9, or the abnormality of ejector 7 occurs, even when on-off valve 8 is closed, a space ranging from on-off valve 8 to ejector 7 is not suctioned by the Venturi effect of ejector 7. According to this, the pressure, which is detected by pressure detection unit 9 of the abnormality detection unit, becomes approximately the same as a pressure on a downstream side of reformer 4 in hydrogen-containing gas flow path 5, and is greater than the second threshold value. According to this, it is possible to detect the abnormality.

FIG. 2 collectively illustrates a method of detecting the abnormality.

As illustrated in FIG. 2, in a state in which feedstock supply device 2 operates for supply, and on-off valve 8 is opened (S301), and in a state in which the detected pressure of pressure detection unit 9 of the abnormality detection unit is less than the first threshold value (S302), controller 10 of the abnormality detection unit performs at least one process among a process of making a determination as abnormality, a process of giving a notification of a state or abnormality of the hydrogen generation apparatus, and a process of stopping driving (S305).

In addition, in a state in which feedstock supply device 2 operates for supply, and on-off valve 8 is opened (S301), and in a state in which the detected pressure of pressure detection unit 9 of the abnormality detection unit is not less than the first threshold value (S302), in a case where the detected pressure of pressure detection unit 9 of the abnormality detection unit after closing on-off valve 8 (S303) is not lowered than the second threshold value that is set to be less than the first threshold value (S304), controller 10 of the abnormality detection unit makes a determination as abnormality (S305).

In addition, in this exemplary embodiment, controller 10 of the abnormality detection unit is configured to make a determination as abnormality, but there is no limitation thereto. Controller 10 may be configured to perform at least one process among a process of making a determination as abnormality, a process of giving a notification of a state or abnormality of hydrogen generation apparatus 100, and a process of stopping driving.

In addition, in a case where abnormality, in which the hydrogen-containing gas does not normally flow through recycle gas flow path 6, is detected, controller 10 of the abnormality detection unit may be configured to determine this case as abnormal. In addition, controller 10 may be configured to notify an outer side of the state or abnormality of hydrogen generation apparatus 100 from hydrogen generation apparatus 100. In addition, controller 10 may be configured to stop the driving of hydrogen generation apparatus 100.

In addition, the first threshold value and the second threshold value become different depending on not only the apparatus configuration but also a flow rate of the feedstock gas, and thus it is also necessary to appropriately set the threshold values in accordance with the flow rate of the feedstock gas.

In addition, there is no difference between a condition in which the detected pressure of pressure detection unit 9 of the abnormality detection unit is not lower than the second threshold value and a condition in which the detected pressure is greater than the second threshold value, and thus any of the conditions may be used.

### (Second Exemplary Embodiment)

According to hydrogen generation apparatus 100 of a second exemplary embodiment of the invention, in a case where the detected pressure value of pressure detection unit 9 of the abnormality detection unit in a state in which feedstock supply device 2 operates for supply and on-off valve 8 is opened is equal to or greater than the first threshold value, and the detected pressure value of pressure detection unit 9 of the abnormality detection unit after on-off valve 8 is closed from the state in which feedstock supply device 2 operates for supply and on-off valve 8 is opened is not lower than the first threshold value, controller 10 of the abnormality detection unit in hydrogen generation apparatus 100 of the first exemplary embodiment is configured to further perform at least one of the following processes.

Specifically, controller 10 of the abnormality detection unit is configured to perform at least one control among control of making a determination as abnormality, control of giving a notification of a state or abnormality of the hydrogen generation apparatus, and control of stopping the driving. In addition, controller 10 of the abnormality detection unit may also be configured to perform at least one process among a process of making a determination as at least one abnormality among abnormality of ejector 7, clogging abnormality of recycle gas flow path 6 between ejector 7 and pressure detection unit 9, and closing operation abnormality of on-off valve 8, a process of giving a notification of a state or abnormality of the hydrogen generation apparatus, a process of stopping the driving, and a process of prohibiting the subsequent activation.

According to this configuration, it is easy to detect the abnormality in which the hydrogen-containing gas does not normally flow through recycle gas flow path 6 and the like.

Hydrogen generation apparatus 100 of this exemplary embodiment is configured in the same manner as hydrogen generation apparatus 100 of the first exemplary embodiment except for the above-described characteristics.

### [Apparatus Configuration]

An apparatus configuration of hydrogen generation apparatus 100 in this exemplary embodiment is the same as in the first exemplary embodiment, and thus description thereof will be omitted.

### [Operation]

Hereinafter, description will be given of an operation of hydrogen generation apparatus 100 of this exemplary embodiment.

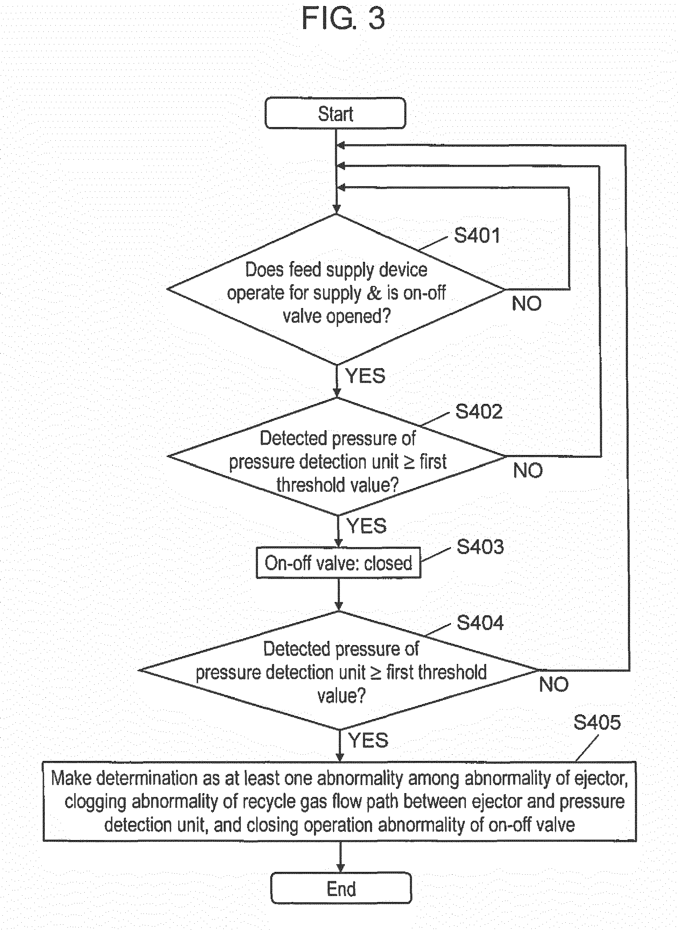

Characteristics of the operation of hydrogen generation apparatus 100 of this exemplary embodiment will be described with reference to FIG. 3. Operations other than the following operations are the same as in hydrogen generation apparatus 100 of the first exemplary embodiment, and thus description thereof will be omitted.

FIG. 3 is a flowchart illustrating an example of a method of driving hydrogen generation apparatus 100 in this exemplary embodiment.

As illustrated in FIG. 3, first, in a state in which feedstock supply device 2 operates for supply and on-off valve 8 is opened (S401), controller 10 of the abnormality detection unit confirms that a detected pressure value of pressure detection unit 9 of the abnormality detection unit is equal to or greater than the first threshold value (S402). If there is no problem in the detected pressure value of pressure detection unit 9 of the abnormality detection unit in a state in which on-off valve 8 is opened, the process transitions to the next step.

Next, on-off valve 8 is closed from the state in which feedstock supply device 2 operates for supply and on-off valve 8 is opened (S403), and confirmation is made on whether or not abnormality occurs by using the detected pressure value of pressure detection unit 9 of the abnormality detection unit.

In a case where the detected pressure value of pressure detection unit 9 of the abnormality detection unit during closing of on-off valve 8 is not lower than the first threshold value (S404), controller 10 of the abnormality detection unit makes a determination as at least one or more among abnormality of ejector 7, clogging abnormality of recycle gas flow path 6 between ejector 7 and pressure detection unit 9, and closing operation abnormality of on-off valve 8 (S405).

In addition, in this exemplary embodiment, controller 10 of the abnormality detection unit makes a determination as at least one or more among abnormality of ejector 7, clogging abnormality of recycle gas flow path 6 between ejector 7 and pressure detection unit 9, and closing operation abnormality of on-off valve 8, but there is no limitation thereto. In a case where the detected pressure value of pressure detection unit 9 of the abnormality detection unit during closing of on-off valve 8 is not lower than the first threshold value (S404), controller 10 of the abnormality detection unit may be configured to perform at least one control among a plurality of kinds of control to be described below.

Specifically, controller 10 of the abnormality detection unit may be configured to perform at least one control among control of making a determination as at least one or more among abnormality of ejector 7, clogging abnormality of recycle gas flow path 6 between ejector 7 and pressure detection unit 9, and closing operation abnormality of on-off valve 8, control of giving a notification of the state or abnormality of hydrogen generation apparatus 100, control of stopping the driving, and control of prohibiting the subsequent activation.

When on-off valve 8 is closed, in a normal state, the detected pressure of pressure detection unit 9 of the abnormality detection unit becomes equal to or less than the second threshold value. In contrast, in a state in which the detected pressure of pressure detection unit 9 of the abnormality detection unit is not lower than the first threshold value, it can be considered that very significant abnormality occurs.

With regard to a portion in which abnormality occurs, abnormality of ejector 7, clogging abnormality of recycle gas flow path 6 between ejector 7 and pressure detection unit 9 of the abnormality detection unit, closing operation abnormality of on-off valve 8, and the like can be exemplified. As the abnormality of ejector 7, clogging abnormality of a flow path (not illustrated) through which the hydrogen-containing gas is introduced into ejector 7, clogging abnormality of a flow path through which a feedstock gas flows at the inside of ejector 7, a decrease in a hydrogen-containing gas suction force of ejector 7 due to deformation, and the like are assumed.

In addition, abnormality, in which recycle gas flow path 6 between ejector 7 and pressure detection unit 9 is clogged with foreign matter and the like, and thus recycle gas flow path 6 is clogged, can be considered. In addition, as the closing operation abnormality of on-off valve 8, abnormality, in which even performing a closing operation, on-off valve 8 is not closed, can be considered.

There is a high possibility that a plurality of kinds of the abnormality described above may not be solved even performing driving of hydrogen generation apparatus 100 again, and thus controller 10 of the abnormality detection unit may be configured not only to implement a countermeasure such as making a determination as abnormality, giving a notification of the state or abnormality of the hydrogen generation apparatus, and stopping the driving, but also to perform control of prohibiting the subsequent activation.

In addition, there is no difference between a condition in which the detected pressure value of pressure detection unit 9 of the abnormality detection unit is not lower than the first threshold value and a condition in which the detected pressure is greater than the first threshold value, and thus any of the conditions may be used.

### [Modification Example]

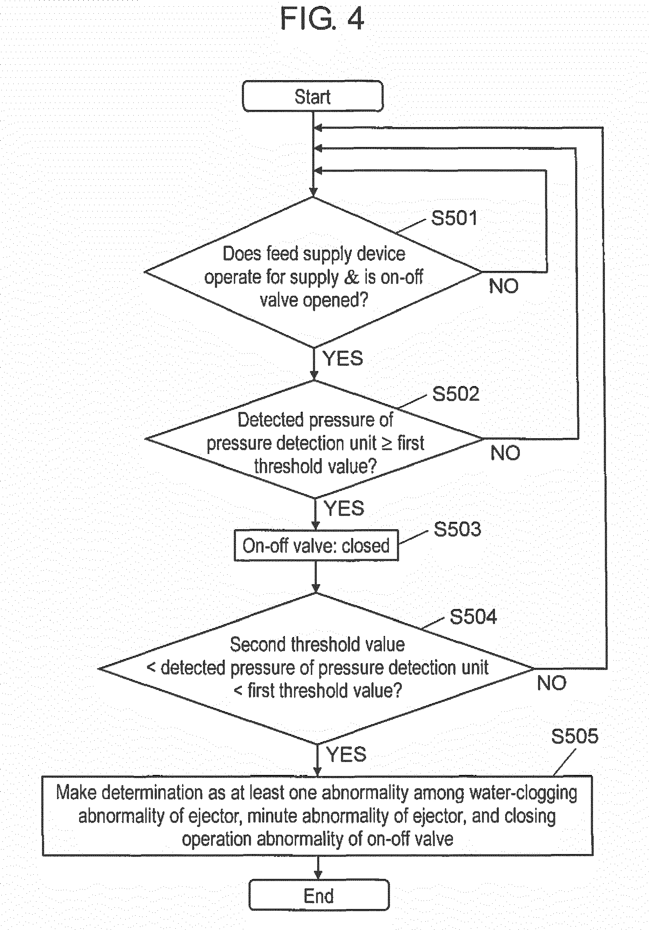

FIG. 4 is a flowchart illustrating an example of a method of driving hydrogen generation apparatus 100 in a modification example of the second exemplary embodiment of the invention.

As illustrated in FIG. 4, in a case where the detected pressure value of pressure detection unit 9 of the abnormality detection unit in a state in which feedstock supply device 2 operates for supply and on-off valve 8 is opened is equal to or greater than the first threshold value, and the detected pressure value of pressure detection unit 9 of the abnormality detection unit after on-off valve 8 is closed from the state in which feedstock supply device 2 operates for supply and on-off valve 8 is opened is lower than the first threshold value but is not lower than the second threshold value, controller 10 of the abnormality detection unit may be configured to perform at least one control among a plurality of kinds of control to be described below.

Specifically, controller 10 of the abnormality detection unit is configured to perform at least one control among control of making a determination as at least one or more among water-clogging abnormality of ejector 7, minute abnormality of ejector 7, and closing operation abnormality of on-off valve 8, control of giving a notification of a state or abnormality of the hydrogen generation apparatus, and control of stopping the driving.

According to this configuration, it is easy to detect the abnormality in which the hydrogen-containing gas does not normally flow through recycle gas flow path 6 and the like.

Hydrogen generation apparatus 100 of this modification example is configured in the same manner as the second exemplary embodiment except for the above-described configuration.

As illustrated in FIG. 4, first, confirmation is made on whether or not the detected pressure value of pressure detection unit 9 of the abnormality detection unit in a state in which feedstock supply device 2 operates for supply and on-off valve 8 is opened (S501) is equal to or greater than the first threshold value (S502). If there is no problem in the detected pressure value of pressure detection unit 9 of the abnormality detection unit in a state in which on-off valve 8 is opened, the process transitions to the next step.

Next, on-off valve 8 is closed from the state in which feedstock supply device 2 operates for supply and on-off valve 8 is opened (S503), and confirmation is made on whether or not abnormality occurs by using the detected pressure value of pressure detection unit 9 of the abnormality detection unit.

In a case where the detected pressure value of pressure detection unit 9 of the abnormality detection unit during closing of on-off valve 8 is lower than the first threshold value, but is not lower than the second threshold value (S504), controller 10 of the abnormality detection unit makes a determination as at least one abnormality among the water-clogging abnormality of ejector 7, the minute abnormality of ejector 7, and the closing operation abnormality of on-off valve 8 (S505).

In addition, in this modification example, controller 10 of the abnormality detection unit makes a determination as at least one abnormality among the water-clogging abnormality of ejector 7, the minute abnormality of ejector 7, and the closing operation abnormality of on-off valve 8 (S505), but there is no limitation thereto.

In a case where the detected pressure value of pressure detection unit 9 of the abnormality detection unit during closing of on-off valve 8 is lower than the first threshold value, but is not lower than the second threshold value (S504), controller 10 of the abnormality detection unit may be configured to perform at least one control among control of making a determination as at least one abnormality among the water-clogging abnormality of ejector 7, the minute abnormality of ejector 7, and the closing operation abnormality of on-off valve 8, control of giving a notification of the state or abnormality of the hydrogen generation apparatus, and control of stopping the driving.

When on-off valve 8 is closed, in a normal state, the detected pressure of pressure detection unit 9 of the abnormality detection unit becomes equal to or less than the second threshold value. In contrast, in a state in which the detected pressure of pressure detection unit 9 of the abnormality detection unit is lower than the first threshold value but is not lower than the second threshold value, it can be considered that minute abnormality occurs.

The minute abnormality represents a state in which a flow rate of the hydrogen-containing gas circulating through recycle gas flow path 6 is lower than a designed value, but the flowing is not completely stopped. According to this, there is a possibility that the minute abnormality may be solved when performing re-activation and the like.

With regard to a portion in which abnormality occurs, the water-clogging abnormality of ejector 7, the minute abnormality of ejector 7, the closing operation abnormality of on-off valve 8, and the like can be exemplified. As the abnormality relating to ejector 7, abnormality, in which the Venturi effect by the ejector decreases due to water-clogging, minute foreign matter clogging, a minute deformation, and the like in ejector 7, can be considered.

In addition, as the closing operation abnormality of on-off valve 8, a vague failure such as on-off valve 8 is not completely closed even when trying to close on-off valve 8, and the hydrogen-containing gas minutely circulates can be considered.

In addition, there is no difference between a condition in which the detected pressure of pressure detection unit 9 of the abnormality detection unit is not lower than the second threshold value and a condition in which the detected pressure is greater than the second threshold value, and thus any of the conditions may be used.

### (Third Exemplary Embodiment)

According to hydrogen generation apparatus 100 of a third exemplary embodiment of the invention, in a case where the detected pressure value of pressure detection unit 9 of the abnormality detection unit in a state in which feedstock supply device 2 operates for supply and on-off valve 8 is opened is lower than a third threshold value that is set to be less than the first threshold value, controller 10 of the abnormality detection unit in hydrogen generation apparatus 100 of any one of the first exemplary embodiment, and the second exemplary embodiment and the modification example thereof is configured to further perform at least one of a plurality of kinds of control to be described below.

Specifically, controller 10 of the abnormality detection unit is configured to perform at least one control among control of making a determination as at least one abnormality between clogging abnormality of recycle gas flow path 6 upstream of pressure detection unit 9 and abnormality in a closed state of on-off valve 8, control of giving a notification of the state or abnormality of hydrogen generation apparatus 100, control of stopping the driving, and control of prohibiting the subsequent activation.

According to this configuration, it is easy to detect the abnormality in which the hydrogen-containing gas does not normally flow through recycle gas flow path 6 and the like.

Hydrogen generation apparatus 100 of this exemplary embodiment is configured in the same manner as hydrogen generation apparatus 100 of any one of the first exemplary embodiment, and the second exemplary embodiment and the modification example thereof except for the above-described characteristics.

### [Apparatus Configuration]

An apparatus configuration of hydrogen generation apparatus 100 in the third exemplary embodiment of the invention is the same as that of any one of the first exemplary embodiment, and the second exemplary embodiment and the modification example thereof, and thus description thereof will be omitted.

### [Operation]

Hereinafter, description will be given of an operation of hydrogen generation apparatus 100.

Characteristics of the operation of hydrogen generation apparatus 100 of this exemplary embodiment will be described with reference to FIG. 4. Operations other than the following operations are the same as in hydrogen generation apparatus 100 of any one of the first exemplary embodiment, and the second exemplary embodiment and the modification example thereof, and thus description thereof will be omitted.

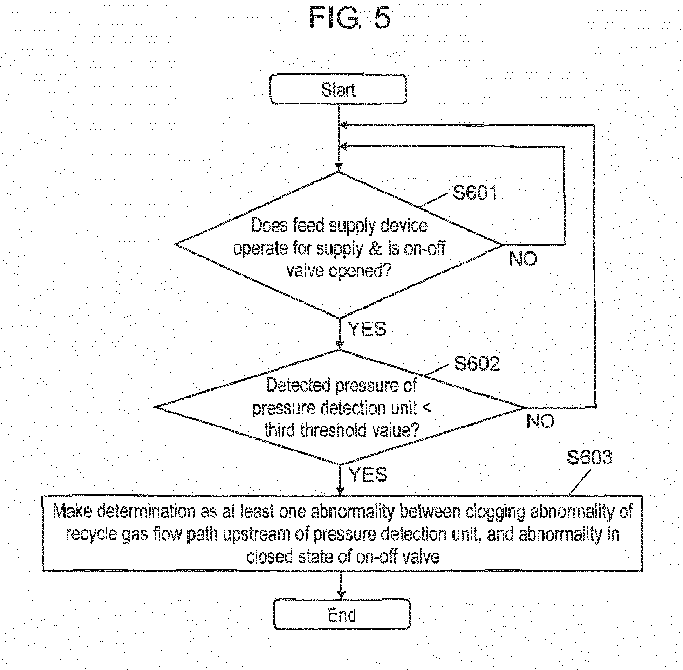

FIG. 5 is a flowchart illustrating an example of a method of driving hydrogen generation apparatus 100 in the third exemplary embodiment of the invention.

As illustrated in FIG. 5, in a case where the detected pressure value of pressure detection unit 9 of the abnormality detection unit in a state in which feedstock supply device 2 operates for supply and on-off valve 8 is opened (S601) is lower than the third threshold value that is set to be less than the first threshold value (S602), controller 10 of the abnormality detection unit makes a determination as any one abnormality between clogging abnormality of recycle gas flow path 6 upstream of pressure detection unit 9 and abnormality in a closed state of on-off valve 8 (S603).

In addition, in this exemplary embodiment, controller 10 of the abnormality detection unit makes a determination as any one abnormality between clogging abnormality of recycle gas flow path 6 upstream of pressure detection unit 9 and abnormality in a closed state of on-off valve 8 (S603), but there is no limitation thereto.

In a case where the detected pressure value of pressure detection unit 9 of the abnormality detection unit in a state in which feedstock supply device 2 operates for supply and on-off valve 8 is opened (S601) is lower than the third threshold value that is set to be less than the first threshold value (S602), controller 10 of the abnormality detection unit is configured to perform at least one control among control of making a determination as at least one abnormality between the clogging abnormality of recycle gas flow path 6 upstream of pressure detection unit 9 and the abnormality in a closed state of on-off valve 8, control of giving a notification of the state or abnormality of the hydrogen generation apparatus, control of stopping the driving, and control of prohibiting the subsequent activation.

In a state in which the hydrogen-containing gas normally flows through recycle gas flow path 6, when feedstock supply device 2 operates for supply, and on-off valve 8 is closed from the state in which on-off valve 8 is opened, the third threshold value is determined from a detected pressure of pressure detection unit 9 of the abnormality detection unit. The third threshold value is set in order for the detected pressure becomes equal to or less than the third threshold value.

Even in a state in which on-off valve 8 is opened, if the detected pressure of pressure detection unit 9 of the abnormality detection unit becomes equal to or less than the third threshold value, it can be considered that very significant abnormality occurs in recycle gas flow path 6 on an upstream side of pressure detection unit 9.

With regard to a portion in which abnormality occurs, clogging abnormality of recycle gas flow path 6 upstream of pressure detection unit 9, abnormality in a closed state of on-off valve 8, and the like can be exemplified.

As the clogging abnormality of recycle gas flow path 6 upstream of pressure detection unit 9, clogging of a flow path with foreign matter and the like are assumed. In addition, as the abnormality in the closed state of on-off valve 8, a state in which on-off valve 8 is kept closed and is not opened, and the like can be considered.

There is a high possibility that a plurality of kinds of the abnormality described above may not be solved even performing driving of hydrogen generation apparatus 100 again, and thus controller 10 may be configured not only to implement a countermeasure such as making a determination as abnormality, giving a notification of the state or abnormality of the hydrogen generation apparatus, and stopping the driving, but also to perform control of prohibiting the subsequent activation.

### [Modification Example]

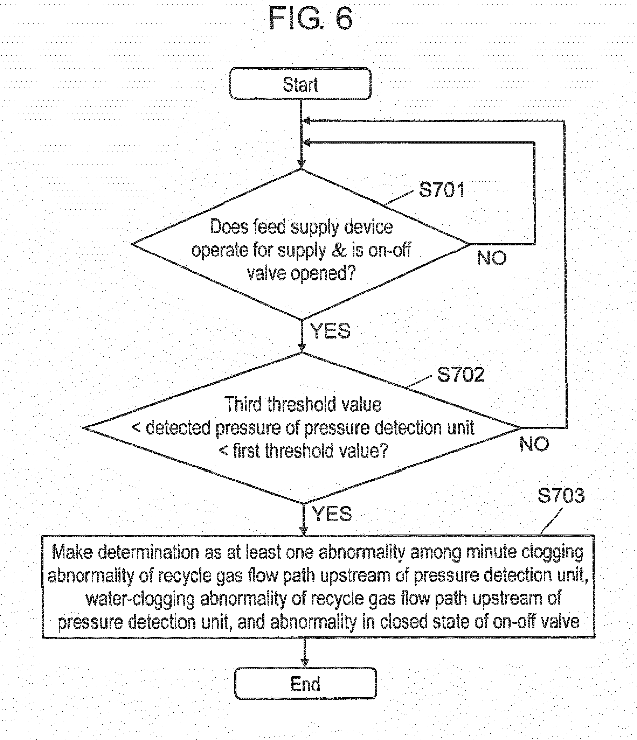

FIG. 6 is a flowchart illustrating an example of a method of driving hydrogen generation apparatus 100 in a modification example of the third exemplary embodiment of the invention.

As illustrated in FIG. 6, in a case where the detected pressure value of pressure detection unit 9 of the abnormality detection unit in a state in which feedstock supply device 2 operates for supply and on-off valve 8 is opened is less than the first threshold value, and is greater than a third threshold value that is set to be less than the first threshold value, controller 10 of the abnormality detection unit is configured to perform at least one among a plurality of kinds of control to be described below.

Specifically, controller 10 of the abnormality detection unit is configured to perform at least one control among control of making a determination as at least one abnormality among minute clogging abnormality and water-clogging abnormality of recycle gas flow path 6 upstream of pressure detection unit 9, and abnormality in a closed state of on-off valve 8, control of giving a notification of a state or abnormality of the hydrogen generation apparatus, and control of stopping the driving.

According to this configuration, it is easy to detect the abnormality in which the hydrogen-containing gas does not normally flow through recycle gas flow path 6 and the like.

Hydrogen generation apparatus 100 of this modification example is configured in the same manner as hydrogen generation apparatus 100 of the third exemplary embodiment except for the above-described configuration.

As illustrated in FIG. 6, in a case where the detected pressure value of pressure detection unit 9 of the abnormality detection unit in a state in which feedstock supply device 2 operates for supply and on-off valve 8 is opened (S701) is less than the first threshold value, and is greater than the third threshold value that is set to be less than the first threshold value (S702), controller 10 of the abnormality detection unit makes a determination as at least one abnormality among minute clogging abnormality and water-clogging abnormality of recycle gas flow path 6 upstream of pressure detection unit 9, and abnormality in the closed state of on-off valve 8 (S703).

In addition, in this modification example, determination is made as at least one abnormality among the minute clogging abnormality and water-clogging abnormality of recycle gas flow path 6 upstream of pressure detection unit 9, and abnormality in the closed state of on-off valve 8 (S703), but there is no limitation thereto.

In a case where the detected pressure value of pressure detection unit 9 of the abnormality detection unit in a state in which feedstock supply device 2 operates for supply and on-off valve 8 is opened (S701) is less than the first threshold value, and is greater than the third threshold value that is set to be less than the first threshold value (S702), controller 10 of the abnormality detection unit may be configured to perform at least one control among control of making a determination as at least one abnormality among the minute clogging abnormality and the water-clogging abnormality of recycle gas flow path 6 upstream of pressure detection unit 9, and the abnormality in a closed state of on-off valve 8, control of giving a notification of the state or abnormality of the hydrogen generation apparatus, and control of stopping the driving.

When on-off valve 8 is opened, in a normal state, the detected pressure of pressure detection unit 9 of the abnormality detection unit becomes equal to or greater than the first threshold value. In contrast, in a case where the detected pressure of pressure detection unit 9 of the abnormality detection unit is lower than the first threshold value, but is greater than the third threshold value, it can be considered that minute abnormality occurs.

The minute abnormality represents a state in which a flow rate of the hydrogen-containing gas circulating through recycle gas flow path 6 is lower than a designed value, but the flowing is not completely stopped. According to this, there is a possibility that the minute abnormality may be solved when performing re-activation and the like.

Examples of the minute abnormality include the minute clogging abnormality and the water-clogging abnormality of recycle gas flow path 6 upstream of pressure detection unit 9, the abnormality in a closed state of on-off valve 8, and the like.

Specifically, a state in which minute foreign matter clogging or water-clogging occurs in recycle gas flow path 6 upstream of pressure detection unit 9, or on-off valve 8 is not opened to a normal degree of opening, and thus flow path resistance increases, abnormality in which on-off valve 8 is clogged with foreign matter, water, and the like, and the like are assumed.

### (Fourth Exemplary Embodiment)

Hydrogen generation apparatus 100 of a fourth exemplary embodiment of the invention is hydrogen generation apparatus 100 of any one of the first exemplary embodiment, the second exemplary embodiment and the modification example thereof, and the third exemplary embodiment and the modification example thereof, and controller 10 of the abnormality detection unit is configured to perform control of periodically closing on-off valve 8 during driving of hydrogen generation apparatus 100.

According to this configuration, it is possible to periodically detect the abnormality in which the hydrogen-containing gas does not normally flow through recycle gas flow path 6 and the like.

Hydrogen generation apparatus 100 of this exemplary embodiment is configured in the same manner as hydrogen generation apparatus 100 of any one of the first exemplary embodiment, the second exemplary embodiment and the modification example thereof, and the third exemplary embodiment and the modification example thereof except for the above-described characteristics.

### [Apparatus Configuration]

An apparatus configuration of hydrogen generation apparatus 100 of this exemplary embodiment is the same as in hydrogen generation apparatus 100 of any one of the first exemplary embodiment, the second exemplary embodiment and the modification example thereof, and the third exemplary embodiment and the modification example thereof, and thus description thereof will be omitted.

### [Operation]

Hereinafter, description will be given of an operation of hydrogen generation apparatus 100 of this exemplary embodiment.

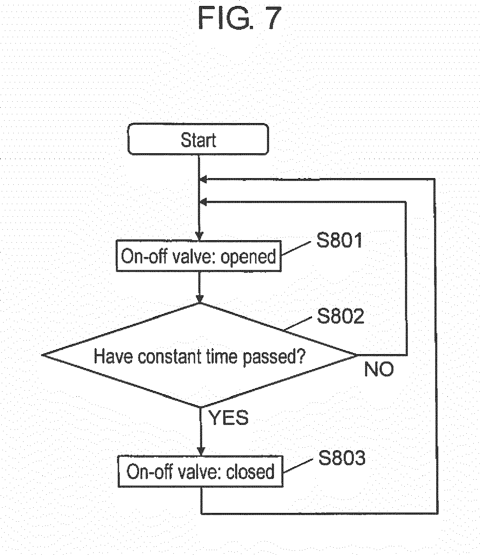

Characteristics of the operation of hydrogen generation apparatus 100 of this exemplary embodiment will be described with reference to FIG. 7. Operations other than the following operations are the same as in hydrogen generation apparatus 100 of any one of the first exemplary embodiment, the second exemplary embodiment and the modification example thereof, and the third exemplary embodiment and the modification example thereof, and thus description thereof will be omitted.

FIG. 7 is a flowchart illustrating an example of a method of driving hydrogen generation apparatus 100 in this exemplary embodiment of the invention.

As illustrated in FIG. 7, in hydrogen generation apparatus 100 of this exemplary embodiment, controller 10 of the abnormality detection unit closes on-off valve 8 (S803) in a periodical manner (S802) from a state in which on-off valve 8 is opened (S801). According to this configuration, it is possible to confirm that the hydrogen-containing gas normally flows through recycle gas flow path 6 by periodically closing on-off valve 8.

In addition, the periodical closing may be performed for each constant time, for each activation of hydrogen generation apparatus 100, for each generation of the hydrogen-containing gas by hydrogen generation apparatus 100, or for each usage of the hydrogen-containing gas by a device, which uses the hydrogen-containing gas generated by hydrogen generation apparatus 100, in hydrogen generation apparatus 100.

It is preferable to periodically perform the abnormality detection operation as described above so as to quickly detect the abnormality in which the hydrogen-containing gas does not flow through recycle gas flow path 6.

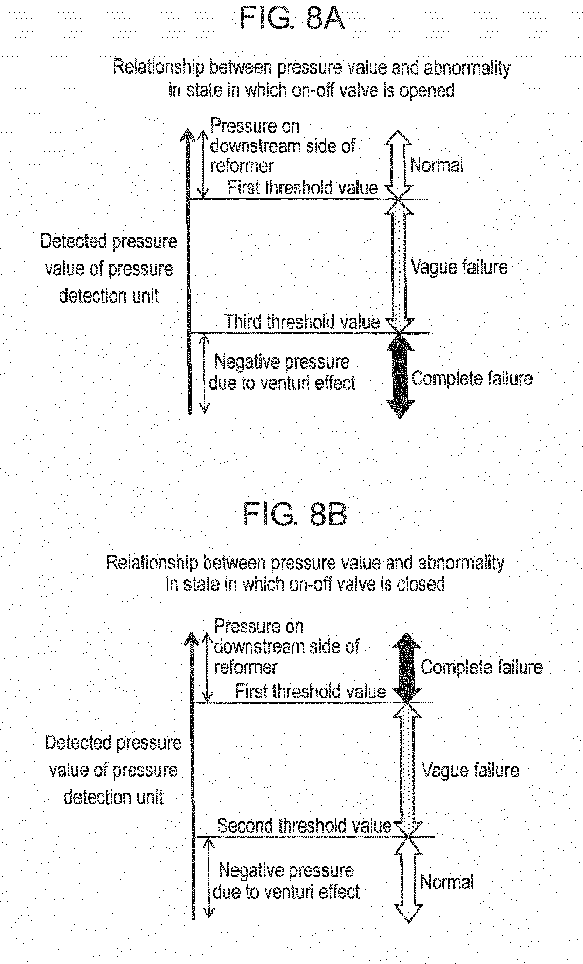

FIG. 8A is a conceptual diagram illustrating a detected pressure value of pressure detection unit 9 of the abnormality detection unit and a state of hydrogen generation apparatus 100 in a state in which on-off valve 8 of hydrogen generation apparatus 100 in this exemplary embodiment is opened. FIG. 8B is a conceptual diagram illustrating a detected pressure value of pressure detection unit 9 of the abnormality detection unit and a state of hydrogen generation apparatus 100 in a state in which on-off valve 8 of hydrogen generation apparatus 100 in this exemplary embodiment is closed.

As illustrated in FIG. 8A and FIG. 8B, the state of hydrogen generation apparatus 100, which is indicated by the detected pressure value of pressure detection unit 9 of the abnormality detection unit, is different between an opened state or a closed state of on-off valve 8.

As illustrated in FIG. 8A, in a state in which on-off valve 8 is opened, if the detected pressure value of pressure detection unit 9 of the abnormality detection unit is equal to or greater than the first threshold value, it can be said that the hydrogen-containing gas, which circulates through recycle gas flow path 6 in hydrogen generation apparatus 100, is in a normal state. If the detected pressure value of pressure detection unit 9 of the abnormality detection unit is less than the first threshold value and is greater than the third threshold value, this state can be said as an abnormal state in which the hydrogen-containing gas, which circulates through recycle gas flow path 6 in hydrogen generation apparatus 100, is reduced. If the detected pressure value of pressure detection unit 9 of the abnormality detection unit is less than the third threshold value, this state can be said as an abnormal state in which the hydrogen-containing gas does not flow through recycle gas flow path 6 in hydrogen generation apparatus 100.

In addition, as illustrated in FIG. 8B, in a state in which on-off valve 8 is closed, if the detected pressure value of pressure detection unit 9 of the abnormality detection unit is equal to or less than the second threshold value, it can be said that the hydrogen-containing gas, which circulates through recycle gas flow path 6 in hydrogen generation apparatus 100, is in a normal state. If the detected pressure value of pressure detection unit 9 of the abnormality detection unit is greater than the second threshold value and is less than the first threshold value, this state can be said as an abnormal state in which the hydrogen-containing gas, which circulates through recycle gas flow path 6 in hydrogen generation apparatus 100, is reduced. If the detected pressure value of pressure detection unit 9 of the abnormality detection unit is equal to or greater than the first threshold value, this state can be said as an abnormal state in which the hydrogen-containing gas does not flow through recycle gas flow path 6 in hydrogen generation apparatus 100.

There is a portion of which abnormality can be confirmed in a state in which on-off valve 8 is opened, and there is a portion of which abnormality cannot be confirmed if on-off valve 8 is not set to the closed state. It is preferable to periodically close on-off valve 8 so as to increase reliability of the portion of which abnormality cannot be confirmed if on-off valve 8 is not closed.

### (Fifth Exemplary Embodiment)

A fuel cell system of a fifth exemplary embodiment of the invention further includes fuel cell 11 that performs power generation by using the hydrogen-containing gas that is generated in hydrogen generation apparatus 100 in addition to hydrogen generation apparatus 100 of any one of the first exemplary embodiment, the second exemplary embodiment and the modification example thereof, the third exemplary embodiment and the modification example thereof, and the fourth exemplary embodiment.

According to this configuration, in fuel cell system 200 including fuel cell 11, it is possible to detect abnormality of the hydrogen-containing gas that flows through recycle gas flow path 6.

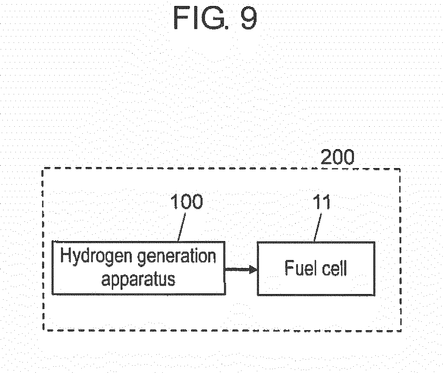

FIG. 9 is a conceptual diagram illustrating an example of a schematic configuration of fuel cell system 200 in the fifth exemplary embodiment of the invention.

In the example illustrated in FIG. 9, fuel cell system 200 of this exemplary embodiment further includes fuel cell 11 in addition to hydrogen generation apparatus 100 of any one of the first exemplary embodiment, the second exemplary embodiment and the modification example thereof, the third exemplary embodiment and the modification example thereof, and the fourth exemplary embodiment.

Fuel cell 11 is a fuel cell that performs power generation by using the hydrogen-containing gas that is supplied from hydrogen generation apparatus 100. Fuel cell 11 may be any kind of fuel cell, and for example, a polymer electrolyte type fuel cell (PEFC), a solid oxide type fuel cell, a phosphoric acid type fuel cell, and the like can be used.

Fuel cell system 200 performs power generation by using the hydrogen-containing gas that is supplied from hydrogen generation apparatus 100 during power generation driving. Fuel cell system 200 in this exemplary embodiment includes hydrogen generation apparatus 100 of the first exemplary embodiment, and fuel cell 11 as a device that uses the hydrogen-containing gas that is generated in hydrogen generation apparatus 100 of the first exemplary embodiment. Accordingly, an operation of hydrogen generation apparatus 100 in this exemplary embodiment is the same as the operation in the first exemplary embodiment. Accordingly, detailed description of the operation of hydrogen generation apparatus 100 in this exemplary embodiment will be omitted.

### (Sixth Exemplary Embodiment)

Hydrogen generation apparatus 100 of a sixth exemplary embodiment of the invention includes hydro-desulfurizer 1, feedstock supply device 2, feedstock supply flow path 3, reformer 4, hydrogen-containing gas flow path 5, recycle gas flow path 6, ejector 7, on-off valve 8, and an abnormality detection unit. The abnormality detection unit includes pressure detection unit 9 and controller 10.

Pressure detection unit 9 of the abnormality detection unit of hydrogen generation apparatus 100 of this exemplary embodiment detects a pressure of feedstock supply flow path 3 between feedstock supply device 2 and ejector 7.

According to this configuration, pressure detection unit 9 of the abnormality detection unit is disposed upstream of ejector 7, and thus a water-vapor-containing gas does not flow through the inside of pressure detection unit 9 of the abnormality detection unit, and erroneous measurement of a pressure due to condensed water of the water vapor is prevented, and thus it is possible to correctly detect the pressure.

### [Apparatus Configuration]

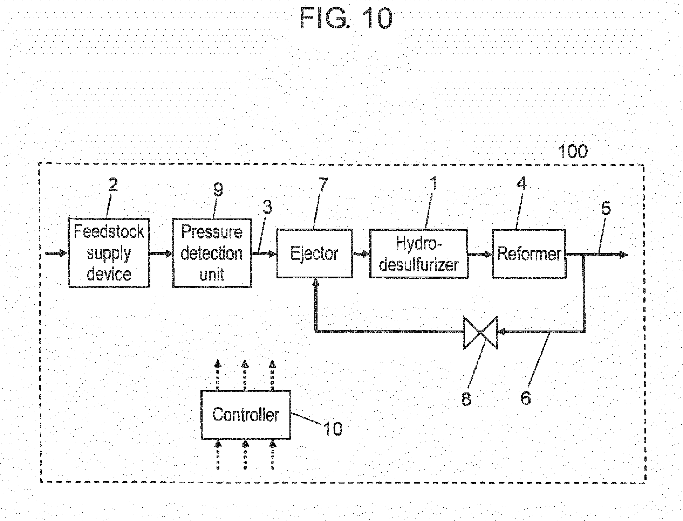

FIG. 10 is a conceptual diagram illustrating an example of a schematic configuration of hydrogen generation apparatus 100 in the sixth exemplary embodiment of the invention.

As illustrated in FIG. 10, in hydrogen generation apparatus 100 of this exemplary embodiment, pressure detection unit 9 of the abnormality detection unit is provided between feedstock supply device 2 and ejector 7. Other apparatus configurations of hydrogen generation apparatus 100 of this exemplary embodiment are the same as those of hydrogen generation apparatus 100 of any one of the first exemplary embodiment, the second exemplary embodiment and the modification example thereof, the third exemplary embodiment and the modification example thereof, and the fourth exemplary embodiment. Accordingly, description of the same configurations as in the exemplary embodiments and the modification examples will be omitted

### [Operation]

Hereinafter, description will be given of an operation of hydrogen generation apparatus 100 of this exemplary embodiment.

Operations of hydrogen generation apparatus 100 other than the following operations are the same as in hydrogen generation apparatus 100 of any one of the first exemplary embodiment, the second exemplary embodiment and the modification example thereof, the third exemplary embodiment and the modification example thereof, and the fourth exemplary embodiment. Accordingly, description of the same operations as in the exemplary embodiments and the modification examples will be omitted.

In hydrogen generation apparatus 100 of this exemplary embodiment, in a case where recycle gas flow path 6 is not clogged, a total gas flow rate, which is obtained by adding a predetermined feedstock gas flow rate that is supplied from feedstock supply device 2, and a recycle gas flow rate that passes through recycle gas flow path 6, flows to ejector 7, hydro-desulfurizer 1, and reformer 4. According to this, a pressure loss of ejector 7, hydro-desulfurizer 1, and reformer 4 becomes a first pressure loss when the total gas flow rate flows.

On the other hand, in a case where recycle gas flow path 6 is clogged, only the predetermined feedstock gas flow rate, which is supplied from feedstock supply device 2, flows to ejector 7, hydro-desulfurizer 1, and reformer 4. According to this, the pressure loss of ejector 7, hydro-desulfurizer 1, and reformer 4 becomes a second pressure loss when the feedstock gas flow rate flows. At this time, a relationship of the first pressure loss>the second pressure loss is satisfied.

When the pressure loss of ejector 7, hydro-desulfurizer 1, and reformer 4 increases, a pressure that is detected by pressure detection unit 9 of the abnormality detection unit increases. On the other hand, when the pressure loss of ejector 7, hydro-desulfurizer 1, and reformer 4 decreases, a pressure that is detected by pressure detection unit 9 of the abnormality detection unit decreases.

First, in a state in which on-off valve 8 is opened, hydrogen generation apparatus 100 generates the hydrogen-containing gas in reformer 4, and the recycle gas (hydrogen-containing gas) flows to recycle gas flow path 6.

In a case where the detected pressure value of pressure detection unit 9 of the abnormality detection unit in a state in which feedstock supply device 2 operates for supply and on-off valve 8 is opened is equal to or less than a fourth threshold value that is determined in advance, controller 10 of the abnormality detection unit performs at least one control among control of making a determination as at least one abnormality between clogging abnormality of recycle gas flow path 6 and abnormality in a closed state of on-off valve 8, control of giving a notification of a state or abnormality of hydrogen generation apparatus 100, control of stopping the driving, and control of prohibiting the subsequent activation.

In addition, even though the detected pressure value of pressure detection unit 9 of the abnormality detection unit in a state in which feedstock supply device 2 operates for supply and on-off valve 8 is opened is equal to or greater than the fourth threshold value, in a case where a detected pressure value of pressure detection unit 9 of the abnormality detection unit after on-off valve 8 is closed from the state in which feedstock supply device 2 operates for supply and on-off valve 8 is opened is not lower than the fourth threshold value, controller 10 of the abnormality detection unit performs at least one control among control of making a determination as at least one abnormality between the clogging abnormality of recycle gas flow path 6 and the abnormality in a closed state of on-off valve 8, control of giving a notification of the state or abnormality of hydrogen generation apparatus 100, control of stopping the driving, and control of prohibiting the subsequent activation.

The fourth threshold value is a value between a pressure of feedstock supply flow path 3 when recycle gas flow path 6 is not clogged, and a pressure of feedstock supply flow path 3 when recycle gas flow path 6 is clogged.

In a case where recycle gas flow path 6 is not clogged, the total gas flow rate, which is obtained by adding the predetermined feedstock gas flow rate that is supplied from feedstock supply device 2, and the recycle gas flow rate that passes through recycle gas flow path 6, flows to ejector 7, hydro-desulfurizer 1, and reformer 4.

On the other hand, in a case where recycle gas flow path 6 is clogged, only the predetermined feedstock gas flow rate, which is supplied from feedstock supply device 2, flows to ejector 7, hydro-desulfurizer 1, and reformer 4. According to this, in a case where recycle gas flow path 6 is clogged, the gas flow rate, which flows through ejector 7, hydro-desulfurizer 1, and reformer 4 is reduced.

When the gas flow rate, which flows through ejector 7, hydro-desulfurizer 1, and reformer 4, decreases, a pressure, which is detected by pressure detection unit 9 of the abnormality detection unit, decreases.

When feedstock supply device 2 supplies a predetermined feedstock gas flow rate (for example Q1), a pressure value of feedstock supply flow path 3 in a case where recycle gas flow path 6 is not clogged becomes P1. On the other hand, in a case where recycle gas flow path 6 is clogged, the pressure value of feedstock supply flow path 3 becomes P2, and thus the pressure is lowered.

That is, in a case where the pressure value of feedstock supply flow path 3 becomes equal to or less than P2, recycle gas flow path 6 is in a clogged state. In a case where the pressure value, which is detected by pressure detection unit 9 of the abnormality detection unit, is equal to or less than the fourth threshold value in any feedstock gas flow rate, controller 10 of the abnormality detection unit detects clogging of recycle gas flow path 6.

According to the configuration of hydrogen generation apparatus 100 in this exemplary embodiment, pressure detection unit 9 of the abnormality detection unit is disposed in feedstock supply flow path 3 between feedstock supply device 2 and ejector 7 (upstream of ejector 7), and thus the water-vapor-containing gas does not flow through the inside of pressure detection unit 9 of the abnormality detection unit, and erroneous measurement of a pressure due to condensed water of the water vapor is prevented, and thus it is possible to correctly detect the pressure.

In addition, according to the configuration of hydrogen generation apparatus 100 of this exemplary embodiment, it is possible to detect clogging of recycle gas flow path 6 at opening and closing timing of on-off valve 8, and thus it is possible to reliably detect clogging of recycle gas flow path 6 at timing at which clogging detection is desired to be performed.

### (Seventh Exemplary Embodiment)

Hydrogen generation apparatus 100 of a seventh exemplary embodiment of the invention is different from hydrogen generation apparatus 100 of the sixth exemplary embodiment in that pressure detection unit 9 of the abnormality detection unit is disposed in feedstock supply flow path 3 between ejector 7 and hydro-desulfurizer 1 (downstream of ejector 7).

In hydrogen generation apparatus 100 of this exemplary embodiment, pressure detection unit 9 of the abnormality detection unit is disposed in feedstock supply flow path 3 between ejector 7 and hydro-desulfurizer 1 (downstream of ejector 7). Pressure detection unit 9 of the abnormality detection unit measures a pressure of a mixed gas of the recycle gas that contains water vapor and the feedstock gas that is dried.

According to this configuration, it is possible to further suppress the erroneous measurement of the pressure due to the condensed water of water vapor in comparison to measurement of the pressure inside recycle gas flow path 6, and thus it is possible to correctly detect the pressure.

### [Apparatus Configuration]

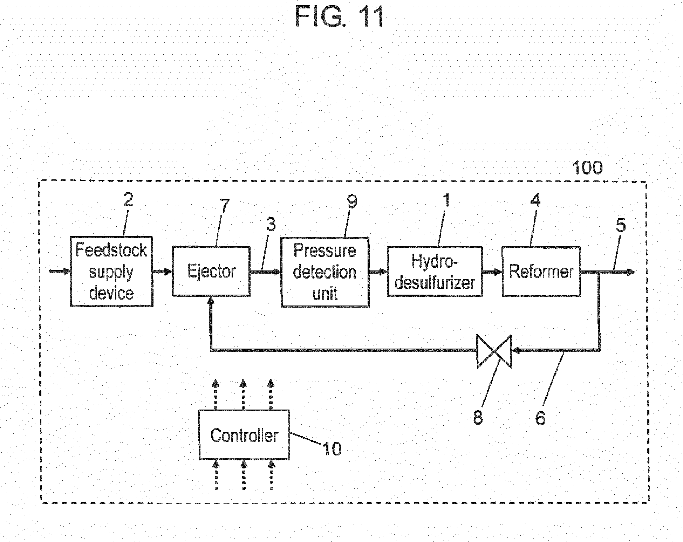

FIG. 11 is a conceptual diagram illustrating an example of a schematic configuration of hydrogen generation apparatus 100 in the seventh exemplary embodiment of the invention.

Hydrogen generation apparatus 100 of this exemplary embodiment is the same as hydrogen generation apparatus 100 of any one of the first exemplary embodiment, the second exemplary embodiment and the modification example thereof, the third exemplary embodiment and the modification example thereof, the fourth exemplary embodiment, and the sixth exemplary embodiment except for the configuration in which pressure detection unit 9 of the abnormality detection unit is disposed in feedstock supply flow path 3 between ejector 7 and hydro-desulfurizer 1 (downstream of ejector 7). Accordingly, description of the same configurations as in the exemplary embodiments and the modification examples will be omitted.

### [Operation]

Hereinafter, description will be given of an operation of hydrogen generation apparatus 100 of this exemplary embodiment.

Operations of hydrogen generation apparatus 100 other than the following operations are the same as in hydrogen generation apparatus 100 of any one of the first exemplary embodiment, the second exemplary embodiment and the modification example thereof, the third exemplary embodiment and the modification example thereof, the fourth exemplary embodiment, and the sixth exemplary embodiment. Accordingly, description of the same operations as in the exemplary embodiments and the modification examples will be omitted.

In hydrogen generation apparatus 100 of this exemplary embodiment, pressure detection unit 9 of the abnormality detection unit detects a variation of a pressure loss of hydro-desulfurizer 1 and reformer 4. Pressure detection unit 9 of the abnormality detection unit cannot measure the pressure loss of ejector 7, but can detect the variation of the pressure loss of hydro-desulfurizer 1 and reformer 4. Accordingly, in detection of clogging of recycle gas flow path 6, approximately the same effect as in hydrogen generation apparatus 100 of the sixth exemplary embodiment illustrated in FIG. 10 is obtained.

In addition, according to the configuration in which pressure detection unit 9 of the abnormality detection unit is disposed in feedstock supply flow path 3 between ejector 7 and hydro-desulfurizer 1 (downstream of ejector 7), the pressure of the mixed gas of the recycle gas that contains water vapor and the feedstock gas that is dried is measured by pressure detection unit 9 of the abnormality detection unit. According to this, it is possible to further suppress the erroneous measurement of the pressure due to the condensed water of water vapor in comparison to measurement of the pressure inside recycle gas flow path 6, and thus it is possible to correctly detect the pressure.

The above description is illustrative only, and it should be understood by those skilled in the art that modification of the structures and the functions in the respective exemplary embodiments of the invention, and other exemplary embodiments of the invention can be made.

### INDUSTRIAL APPLICABILITY

As described above, the invention provides a hydrogen generation apparatus that exhibits a remarkable effect capable of detecting abnormality of the recycle gas flow path, the ejector, and the like without being affected by a temperature variation of the recycle gas flow path in accordance with a variation of the feedstock gas flow rate, a variation of the amount of the hydrogen-containing gas that is generated, and the like. Accordingly, the hydrogen generation apparatus is useful for the fuel cell system that includes the hydro-desulfurizer, the fuel cell system that includes the hydrogen generation apparatus, and the like.

### REFERENCE MARKS IN THE DRAWINGS

- 1: Hydro-desulfurizer
- 2: Feedstock supply device
- 3: Feedstock supply flow path
- 4: Reformer
- 5: Hydrogen-containing gas flow path
- 6: Recycle gas flow path
- 7: Ejector
- 8: On-off valve
- 9: Pressure detection unit
- 10: Controller
- 11: Fuel cell
- 100: Hydrogen generation apparatus
- 200: Fuel cell system

## Claims

1. A hydrogen generation apparatus, comprising:
a hydro-desulfurizer (1) configured to cause a sulfur compound in a feedstock gas to react with hydrogen to remove the sulfur compound;
a feedstock supply device (2) configured to raise a pressure of the feedstock gas and supplies the feedstock gas to the hydro-desulfurizer (1);
a feedstock supply flow path (3) that is provided between the feedstock supply device (2) and the hydro-desulfurizer (1);
a reformer (4) configured to generate a hydrogen-containing gas by using a feedstock gas that passes through the hydro-desulfurizer (1);
a hydrogen-containing gas flow path (5) through which the hydrogen-containing gas is discharged from the reformer (4);
a recycle gas flow path (6) that diverges a part of the hydrogen-containing gas, which is discharged from the reformer (4), from the hydrogen-containing gas flow path (5) to mix the hydrogen-containing gas with a feedstock gas that flows into the feedstock supply flow path (3);
an ejector (7) that is disposed at a joint portion between the feedstock supply flow path (3) and the recycle gas flow path (6);
an on-off valve (8) that is provided to the recycle gas flow path (6); and
an abnormality detection unit (9, 10) configured to detect abnormality when the hydrogen-containing gas is not normally supplied to the hydro-desulfurizer (1) through the recycle gas flow path (6),
wherein the abnormality detection unit (9, 10) is configured to detect the abnormality when the hydrogen-containing gas is not normally supplied to the hydro-desulfurizer (1) through the recycle gas flow path (6) on the basis of a pressure of the feedstock supply flow path (3) or a pressure of the recycle gas flow path (6) downstream of the on-off valve (8).

2. The hydrogen generation apparatus of claim 1,
wherein the abnormality detection unit includes a pressure detection unit (9) configured to detect a pressure of the recycle gas flow path (6) downstream of the on-off valve (8), and a controller (10),
in a case where a detected pressure value of the pressure detection unit (9) in a state in which the feedstock supply device (2) operates for supply and the on-off valve (8) is opened is less than a first threshold value, or in a case where a detected pressure value of the pressure detection unit (9) after the on-off valve (8) is closed from the state in which the feedstock supply device (2) operates for supply and the on-off valve (8) is opened is not a second threshold value or is not lower than the second threshold value that is set to be less than the first threshold value, the controller (10) is configured to perform at least one control among control of making a determination as abnormality, control of giving a notification of a state or abnormality of the hydrogen generation apparatus, and control of stopping driving of the hydrogen generation apparatus.

3. The hydrogen generation apparatus of claim 2, wherein in a case where the detected pressure value of the pressure detection unit (9) in a state in which the feedstock supply device (2) operates for supply and the on-off valve (8) is opened is equal to or greater than the first threshold value, and the detected pressure value of the pressure detection unit (9) after the on-off valve (8) is closed from the state in which the feedstock supply device (2) operates for supply and the on-off valve (8) is opened is not lower than the first threshold value, the controller (10) is configured to perform at least one control among control of making a determination as at least one abnormality among abnormality of the ejector (7), clogging abnormality of the recycle gas flow path (6) between the ejector (7) and the pressure detection unit (9), and closing operation abnormality of the on-off valve (8), control of giving a notification of the state or the abnormality of the hydrogen generation apparatus, control of stopping the driving, and prohibiting the subsequent activation.

4. The hydrogen generation apparatus of claim 2, wherein in a case where the detected pressure value of the pressure detection unit (9) in a state in which the feedstock supply device (2) operates for supply and the on-off valve (8) is opened is equal to or greater than the first threshold value, and the detected pressure value of the pressure detection unit (9) after the on-off valve (8) is closed from the state in which the feedstock supply device (2) operates for supply and the on-off valve (8) is opened is lower than the first threshold value but is not lower than the second threshold value, the controller (10) is configured to perform at least one control among control of making a determination as at least one abnormality among water-clogging abnormality of the ejector (7), minute abnormality of the ejector (7), and closing operation abnormality of the on-off valve (8), control of giving a notification of the state or abnormality of the hydrogen generation apparatus, and control of stopping the driving.

5. The hydrogen generation apparatus of claim 2, wherein in a case where the detected pressure value of the pressure detection unit (9) in a state in which the feedstock supply device (2) operates for supply and the on-off valve (8) is opened is lower than a third threshold value that is set to be less than the first threshold value, the controller (10) is configured to perform at least one control among control of making a determination as at least one abnormality between clogging abnormality of the recycle gas flow path (6) upstream of the pressure detection unit (9) and abnormality in a closed state of the on-off valve (8), control of giving a notification of the state or abnormality of the hydrogen generation apparatus, control of stopping the driving, and control of prohibiting the subsequent activation.

6. The hydrogen generation apparatus of claim 2, wherein in a case where the detected pressure value of the pressure detection unit (9) in a state in which the feedstock supply device (2) operates for supply and the on-off valve (8) is opened is less than the first threshold value, and is greater than a third threshold value that is set to be less than the first threshold value, the controller (10) is configured to perform control at least one control among control of making a determination as at least one abnormality among minute clogging abnormality and water-clogging abnormality of the recycle gas flow path (6) upstream of the pressure detection unit (9), and abnormality in a closed state of the on-off valve (8), control of giving a notification of the state or abnormality of the hydrogen generation apparatus, and control of stopping the driving.

7. The hydrogen generation apparatus of claim 1,
wherein the abnormality detection unit includes a pressure detection unit (9) configured to detect a pressure of the feedstock supply flow path (3), and a controller (10),
in a case where a detected pressure value of the pressure detection unit (9) in a state in which the feedstock supply device (2) operates for supply and the on-off valve (8) is opened is equal to or greater than a fourth threshold value, and in a case where a detected pressure value of the pressure detection unit (9) after the on-off valve (8) is closed from the state in which the feedstock supply device (2) operates for supply and the on-off valve (8) is opened is not lower than the fourth threshold value, the controller (10) is configured to perform at least one control among control of making a determination as abnormality, control of giving a notification of a state or abnormality of the hydrogen generation apparatus, and control of stopping driving of the hydrogen generation apparatus.

8. The hydrogen generation apparatus of any one of claims 2 to 7, wherein the controller (10) is configured to perform control of periodically closing the on-off valve (8) during driving of the hydrogen generation apparatus.

9. A fuel cell system, comprising:
the hydrogen generation apparatus (100) of any one of claims 1 to 8; and
a fuel cell (11) configured to perform power generation by using the hydrogen-containing gas that is generated in the hydrogen generation apparatus (100).

10. A method of driving a hydrogen generation apparatus (100) including a hydro-desulfurizer (1) configured to cause a sulfur compound in a feedstock gas to react with hydrogen to remove the sulfur compound, a feedstock supply device (2) configured to raise a pressure of the feedstock gas and supplies the feedstock gas to the hydro-desulfurizer (1), a feedstock supply flow path (3) that is provided between the feedstock supply device (2) and the hydro-desulfurizer (1), a reformer (4) configured to generate a hydrogen-containing gas by using a feedstock gas that passes through the hydro-desulfurizer (1), a hydrogen-containing gas flow path (5) through which the hydrogen-containing gas is discharged from the reformer (4), a recycle gas flow path (6) that diverges a part of the hydrogen-containing gas, which is discharged from the reformer (4), from the hydrogen-containing gas flow path (5) to mix the hydrogen-containing gas with a feedstock gas that flows into the feedstock supply flow path (3), an ejector (7) that is disposed at a joint portion between the feedstock supply flow path (3) and the recycle gas flow path (6), and an on-off valve (8) that is provided to the recycle gas flow path (6), the method comprising:
a pressure detection step of detecting a pressure of the feedstock supply flow path (3), or a pressure of the recycle gas flow path (6) downstream of the on-off valve (8); and
an abnormality detection step of detecting abnormality when the hydrogen-containing gas is not normally supplied to the hydro-desulfurizer (1) through the recycle gas flow path (6) on the basis of the pressure of the feedstock supply flow path (3) or the pressure of the recycle gas flow path (6) downstream of the on-off valve (8).

11. The method of driving a hydrogen generation apparatus of claim 10, wherein in the abnormality detection step, in a case where in a state in which the feedstock supply device (2) supplies feedstock, and the on-off valve (8) is opened, the pressure of the recycle gas flow path (6) downstream of the on-off valve (8) is less than a first threshold value, or in a case where a pressure of the recycle gas flow path (6) downstream of the on-off valve (8) after closing the on-off valve (8) from the state in which the feedstock supply device (2) operates for supply and the on-off valve (8) is opened is not a second threshold value or is not lower than the second threshold value that is set to be less than the first threshold value, at least one of a process of making a determination as abnormality, a process of giving a notification of a state or abnormality of the hydrogen generation apparatus, and a process of stopping driving is performed.

## Patentansprüche

1. Wasserstofferzeugungs-Vorrichtung, die umfasst:
eine Hydro-Entschwefelungseinrichtung (1), die so eingerichtet ist, dass sie bewirkt, dass eine Schwefelverbindung in einem Rohstoff-Gas mit Wasserstoff reagiert, um die Schwefelverbindung zu entfernen;
eine Rohstoff-Zuführeinrichtung (2), die so eingerichtet ist, dass sie einen Druck des Rohstoff-Gases erhöht und das Rohstoff-Gas der Hydro-Entschwefelungseinrichtung (1) zuführt;
einen Strömungsweg (3) zur Zufuhr von Rohstoff, der sich zwischen der Rohstoff-Zuführeinrichtung (2) und der Hydro-Entschwefelungseinrichtung (1) befindet;
einen Reformer (4), der so eingerichtet ist, dass er ein wasserstoffhaltiges Gas unter Verwendung eines Rohstoff-Gases erzeugt, das die Hydro-Entschwefelungseinrichtung (1) durchläuft;
einen Strömungsweg (5) für wasserstoffhaltiges Gas, über den das wasserstoffhaltige Gas aus dem Reformer (4) abgeleitet wird;
einen Strömungsweg (6) für Recycle-Gas, der einen Teil des wasserstoffhaltigen Gases, das aus dem Reformer (4) abgeleitet wird, von dem Strömungsweg (5) für wasserstoffhaltiges Gas umleitet, um das wasserstoffhaltige Gas mit einem Rohstoff-Gas zu mischen, das in den Strömungsweg (3) zur Zufuhr von Rohstoff einströmt;
einen Ejektor (7), der an einem Verbindungsabschnitt zwischen dem Strömungsweg (3) zur Zufuhr von Rohstoff und dem Strömungsweg (6) für Recycle-Gas angeordnet ist;
ein Schaltventil (8), das an dem Strömungsweg (6) für Recycle-Gas vorhanden ist; sowie
eine Einheit (9, 10) zur Erfassung von Störung, die Störung erfasst, wenn das wasserstoffhaltige Gas der Hydro-Entschwefelungseinrichtung (1) nicht normal über den Strömungsweg (6) für Recycle-Gas zugeführt wird,
wobei die Einheit (9, 10) zur Erfassung von Störung so eingerichtet ist, dass sie die Störung auf Basis eines Drucks des Strömungsweges (3) zur Zufuhr von Rohstoff oder eines Drucks des Strömungsweges (6) für Recycle-Gas stromab von dem Schaltventil (8) erfasst, wenn das wasserstoffhaltige Gas der Hydro-Entschwefelungseinrichtung (1) nicht normal über den Strömungsweg (6) für Recycle-Gas zugeführt wird.

2. Wasserstofferzeugungs-Vorrichtung nach Anspruch 1,
wobei die Einheit zur Erfassung von Störung eine Druckerfassungs-Einheit (9), die so eingerichtet ist, dass sie einen Druck des Strömungsweges (6) für Recycle-Gas stromab von dem Schaltventil (8) erfasst, sowie eine Steuerungseinrichtung (10) einschließt,
und die Steuerungseinrichtung (10) so eingerichtet ist, dass sie, wenn ein erfasster Druck-Wert der Druckerfassungs-Einheit (9) in einem Zustand, in dem die Rohstoff-Zuführeinrichtung (2) zur Zufuhr arbeitet, und das Schaltventil (8) geöffnet ist, unter einem ersten Schwellenwert liegt, oder, wenn ein erfasster Druck-Wert der Druckerfassungs-Einheit (9), nachdem das Schaltventil (8) von dem Zustand ausgehend geschlossen wird, in dem die Rohstoff-Zuführeinrichtung (2) zur Zufuhr arbeitet und das Schaltventil (8) geöffnet ist, nicht auf einem zweiten Schwellenwert liegt oder nicht unter dem zweiten Schwellenwert liegt, der so eingestellt ist, dass er niedriger ist als der erste Schwellenwert, wenigstens eine Steuerung von Steuerung, mit der eine Feststellung von Störung getroffen wird, Steuerung, mit der eine Mitteilung über einen Zustand oder Störung der Wasserstofferzeugungs-Vorrichtung gemacht wird, und Steuerung durchführt, mit der Ansteuerung der Wasserstofferzeugungs-Vorrichtung unterbrochen wird.

3. Wasserstofferzeugungs-Vorrichtung nach Anspruch 2, wobei die Steuerungseinrichtung (10) so eingerichtet ist, dass sie, wenn der erfasste Druck-Wert der Druckerfassungs-Einheit (9) in einem Zustand, in dem die Rohstoff-Zuführeinrichtung (2) zur Zufuhr arbeitet, und das Schaltventil (8) geöffnet ist, auf oder über dem ersten Schwellenwert liegt, und der erfasste Druck-Wert der Druckerfassungs-Einheit (9), nachdem das Schaltventil (8) von dem Zustand ausgehend geschlossen wird, in dem die Rohstoff-Zuführeinrichtung (2) zur Zufuhr arbeitet und das Schaltventil (8) geöffnet ist, nicht unter dem ersten Schwellenwert liegt, wenigstens eine Steuerung von Steuerung, mit der eine Feststellung wenigstens einer Störung von Störung des Ejektors (7), Störung aufgrund von Verstopfung des Strömungsweges (6) für Recycle-Gas zwischen dem Ejektor (7) und der Druckerfassungs-Einheit (9) sowie Störung des Schließ-Vorgangs des Schaltventils (8) getroffen wird, Steuerung, mit der eine Mitteilung über den Zustand oder die Störung der Wasserstofferzeugungs-Vorrichtung gemacht wird, und Steuerung durchführt, mit der die Ansteuerung unterbrochen wird und die anschließende Aktivierung unterbunden wird.

4. Wasserstofferzeugungs-Vorrichtung nach Anspruch 2, wobei die Steuerungseinrichtung (7) so eingerichtet ist, dass sie, wenn der erfasste Druck-Wert der Druckerfassungs-Einheit (9) in einem Zustand, in dem die Rohstoff-Zuführeinrichtung (2) zur Zufuhr arbeitet, und das Schaltventil (8) geöffnet ist, auf oder über dem ersten Schwellenwert liegt, und der erfasste Druck-Wert der Druckerfassungs-Einheit (9), nachdem das Schaltventil (8) von dem Zustand ausgehend geschlossen wird, in dem die Rohstoff-Zuführeinrichtung (2) zur Zufuhr arbeitet und das Schaltventil (8) geöffnet ist, unter dem ersten Schwellenwert liegt, jedoch nicht unter dem zweiten Schwellenwert liegt, wenigstens eine Steuerung von Steuerung, mit der eine Feststellung wenigstens einer Störung von Störung aufgrund von Wasser-Überfüllung des Ejektors (7), geringfügiger Störung des Ejektors (7) sowie Störung des Schließ-Vorgangs des Schaltventils (8) getroffen wird, Steuerung, mit der eine Mitteilung über den Zustand oder Störung der Wasserstofferzeugungs-Vorrichtung gemacht wird, und Steuerung durchführt, mit der die Ansteuerung unterbrochen wird.

5. Wasserstofferzeugungs-Vorrichtung nach Anspruch 2, wobei die Steuerungseinrichtung (10) so eingerichtet ist, dass sie, wenn der erfasste Druck-Wert der Druckerfassungs-Einheit (9) in einem Zustand, in dem die Rohstoff-Zuführeinrichtung (2) zur Zufuhr arbeitet, und das Schaltventil (8) geöffnet ist, unter einem dritten Schwellenwert liegt, der so eingestellt ist, dass er unter dem ersten Schwellenwert liegt, wenigstens eine Steuerung von Steuerung, mit der eine Feststellung wenigstens einer Störung von Störung aufgrund von Verstopfung des Strömungsweges (6) für Recycle-Gas stromauf von der Druckerfassungs-Einheit (9) sowie Störung in einem geschlossenen Zustand des Schaltventils (8) getroffen wird, Steuerung, mit der eine Mitteilung über den Zustand oder Störung der Wasserstofferzeugungs-Vorrichtung gemacht wird, Steuerung, mit der die Ansteuerung unterbrochen wird, und Steuerung durchführt, mit der die anschließende Aktivierung unterbunden wird.

6. Wasserstofferzeugungs-Vorrichtung nach Anspruch 2, wobei die Steuerungseinrichtung (10) so eingerichtet ist, dass sie, wenn der erfasste Druck-Wert der Druckerfassungs-Einheit (9) in einem Zustand, in dem die Rohstoff-Zuführeinrichtung (2) zur Zufuhr arbeitet, und das Schaltventil (8) geöffnet ist, unter dem ersten Schwellenwert liegt und über einem dritten Schwellenwert liegt, der so eingestellt ist, dass er unter dem ersten Schwellenwert liegt, wenigstens eine Steuerung von Steuerung, mit der Feststellung wenigstens einer Störung von Störung aufgrund geringfügiger Verstopfung und Wasser-Überfüllung des Strömungsweges (6) für Recycle-Gas stromauf von der Druckerfassungs-Einheit (9) sowie Störung in einem geschlossenen Zustand des Schaltventils (8) getroffen wird, Steuerung, mit der eine Mitteilung über den Zustand oder Störung der Wasserstofferzeugungs-Vorrichtung gemacht wird, und Steuerung durchführt, mit der die Ansteuerung unterbrochen wird.

7. Wasserstofferzeugungs-Vorrichtung nach Anspruch 1,
wobei die Einheit zur Erfassung von Störung eine Druckerfassungs-Einheit (9), die so eingerichtet ist, dass sie einen Druck des Strömungsweges (3) zur Zufuhr von Rohstoff erfasst, sowie eine Steuerungseinrichtung (10) einschließt,
und die Steuerungseinrichtung (10) so eingerichtet ist, dass sie, wenn ein erfasster Druck-Wert der Druckerfassungs-Einheit (9) in einem Zustand, in dem die Rohstoff-Zuführeinrichtung (2) zur Zufuhr arbeitet, und das Schaltventil (8) geöffnet ist, auf oder über einem vierten Schwellenwert liegt und wenn ein erfasster Druck-Wert der Druckerfassungs-Einheit (9), nachdem das Schaltventil (8) von dem Zustand ausgehend geschlossen wird, in dem die Rohstoff-Zuführeinrichtung (2) zur Zufuhr arbeitet und das Schaltventil (8) geöffnet ist, nicht unter dem vierten Schwellenwert liegt, wenigstens eine Steuerung von Steuerung, mit der eine Feststellung von Störung getroffen wird, Steuerung, mit der eine Mitteilung über einen Zustand oder Störung der Wasserstofferzeugungs-Vorrichtung gemacht wird, und Steuerung durchführt, mit der Ansteuerung der Wasserstofferzeugungs-Vorrichtung unterbrochen wird.

8. Wasserstofferzeugungs-Vorrichtung nach einem der Ansprüche 2 bis 7, wobei die Steuerungseinrichtung (10) so eingerichtet ist, dass sie Steuerung durchführt, mit der das Schaltventil (8) beim Ansteuern der Wasserstofferzeugungs-Vorrichtung periodisch geschlossen wird.

9. Brennstoffzellen-System, das umfasst:
die Wasserstofferzeugungs-Vorrichtung (100) nach einem der Ansprüche 1 bis 8; und
eine Brennstoffzelle (11), die so eingerichtet ist, dass sie Energieerzeugung unter Verwendung des wasserstoffhaltigen Gases durchführt, das in der Wasserstofferzeugungs-Vorrichtung (100) erzeugt wird.

10. Verfahren zum Ansteuern einer Wasserstofferzeugungs-Vorrichtung (100), die eine Hydro-Entschwefelungseinrichtung (1), die so eingerichtet ist, dass sie bewirkt, dass eine Schwefelverbindung in einem Rohstoff-Gas mit Wasserstoff reagiert, um die Schwefelverbindung zu entfernen, eine Rohstoff-Zuführeinrichtung (2), die so eingerichtet ist, dass sie einen Druck des Rohstoff-Gases erhöht und das Rohstoff-Gas der Hydro-Entschwefelungseinrichtung (1) zuführt, einen Strömungsweg (3) zur Zufuhr von Rohstoff, der sich zwischen der Rohstoff-Zuführeinrichtung (2) und der Hydro-Entschwefelungseinrichtung (1) befindet, einen Reformer (4), der so eingerichtet ist, dass er unter Verwendung eines Rohstoff-Gases, das die Hydro-Entschwefelungseinrichtung (1) durchläuft, ein wasserstoffhaltiges Gas erzeugt, einen Strömungsweg (5) für wasserstoffhaltiges Gas, über den das wasserstoffhaltige Gas aus dem Reformer (4) abgeleitet wird, einen Strömungsweg (6) für Recycle-Gas, der einen Teil des wasserstoffhaltigen Gases, das aus dem Reformer (4) abgeleitet wird, von dem Strömungsweg (5) für wasserstoffhaltiges Gas umleitet, um das wasserstoffhaltige Gas mit einem Rohstoff-Gas zu mischen, das in den Strömungsweg (3) zur Zufuhr von Rohstoff einströmt, einen Ejektor (7), der an einem Verbindungsabschnitt zwischen dem Strömungsweg (3) zur Zufuhr von Rohstoff und dem Strömungsweg (6) für Recycle-Gas angeordnet ist, sowie ein Schaltventil (8) enthält, das an dem Strömungsweg (6) für Recycle-Gas vorhanden ist; wobei das Verfahren umfasst:
einen Druckerfassungs-Schritt, in dem ein Druck des Strömungsweges (3) zur Zufuhr von Rohstoff oder ein Druck des Strömungsweges (6) für Recycle-Gas stromab von dem Schaltventil (8) erfasst wird; sowie
einen Schritt zur Erfassung von Störung, mit dem Störung auf Basis des Drucks des Strömungsweges (3) zur Zufuhr von Rohstoff oder des Drucks des Strömungsweges (6) für Recycle-Gas stromab von dem Schaltventil (8) erfasst wird, wenn das wasserstoffhaltige Gas der Hydro-Entschwefelungseinrichtung (1) nicht normal über den Strömungsweg (6) für Recycle-Gas zugeführt wird.

11. Verfahren zum Ansteuern einer Wasserstofferzeugungs-Vorrichtung nach Anspruch 10, wobei in dem Schritt zur Erfassung von Störung, wenn in einem Zustand, in dem die Rohstoff-Zuführeinrichtung (2) Rohstoff zuführt und das Schaltventil (8) geöffnet ist, der Druck des Strömungsweges (6) für Recycle-Gas stromab von dem Schaltventil (8) unter einem ersten Schwellenwert liegt, oder wenn ein Druck des Strömungsweges (6) für Recycle-Gas stromab von dem Schaltventil (8), nachdem das Schaltventil (8) von dem Zustand ausgehend geschlossen wird, in dem die Rohstoff-Zuführeinrichtung (2) zur Zufuhr arbeitet und das Schaltventil (8) geöffnet ist, nicht auf einem zweiten Schwellenwert liegt oder nicht unter dem zweiten Schwellenwert liegt, der so eingestellt ist, dass er niedriger ist als der erste Schwellenwert, wenigstens ein Prozess, mit dem eine Feststellung von Störung getroffen wird, ein Prozess, mit dem eine Mitteilung über einen Zustand oder Störung der Wasserstofferzeugungs-Vorrichtung gemacht wird, und oder ein Prozess durchgeführt wird, mit der Ansteuerung unterbrochen wird.

## Revendications

1. Appareil de génération d'hydrogène, comprenant :
un module d'hydrodésulfuration (1) configuré pour amener un composé soufré dans un gaz de matière première à réagir avec de l'hydrogène pour éliminer le composé soufré ;
un dispositif d'alimentation en gaz de matière première (2) configuré pour augmenter une pression du gaz de matière première et alimenter le module d'hydrodésulfuration (1) avec le gaz de matière première ;
un circuit d'alimentation en gaz de matière première (3) qui est fourni entre le dispositif d'alimentation en gaz de matière première (2) et le module d'hydrodésulfuration (1) ;
un module de reformage (4) configuré pour générer un gaz contenant de l'hydrogène en utilisant un gaz de matière première qui traverse le module d'hydrodésulfuration (1) ;
un circuit de gaz contenant de l'hydrogène (5) à travers lequel le gaz contenant de l'hydrogène est évacué du module de reformage (4) ;
un circuit de gaz de recyclage (6) qui dévie une partie du gaz contenant de l'hydrogène, qui est évacué du module de reformage (4), du circuit de gaz contenant de l'hydrogène (5) pour mélanger le gaz contenant de l'hydrogène avec un gaz de matière première qui s'écoule dans le circuit d'alimentation en matière première (3) ;
un éjecteur (7) qui est disposé au niveau d'une partie de jonction entre le circuit d'alimentation en matière première (3) et le circuit de gaz de recyclage (6) ;
une vanne tout-ou-rien (8) qui est fournie sur le circuit de gaz de recyclage (6) ; et
une unité de détection d'anomalie (9, 10) configurée pour détecter une anomalie lorsque le gaz contenant de l'hydrogène n'est pas fourni normalement au module d'hydrodésulfuration (1) à travers le circuit de gaz de recyclage (6),
l'unité de détection d'anomalie (9, 10) étant configurée pour détecter l'anomalie lorsque le gaz contenant de l'hydrogène n'est pas fourni normalement au module d'hydrodésulfuration (1) à travers le circuit de gaz de recyclage (6) sur la base d'une pression du circuit d'alimentation en matière première (3) ou d'une pression du circuit de gaz de recyclage (6) en aval de la vanne tout-ou-rien (8).

2. Appareil de génération d'hydrogène selon la revendication 1,
dans lequel l'unité de détection d'anomalie inclut une unité de détection de pression (9) configurée pour détecter une pression du circuit de gaz de recyclage (6) en aval de la vanne tout-ou-rien (8), et un module de commande (10),
dans le cas où une valeur de pression détectée de l'unité de détection de pression (9) dans un état où le dispositif d'alimentation en matière première (2) fonctionne en alimentation et la vanne tout-ou-rien (8) est ouverte est inférieure à une première valeur de seuil, ou dans le cas où une valeur de pression détectée de l'unité de détection de pression (9) après fermeture de la vanne tout-ou-rien (8) depuis l'état où le dispositif d'alimentation en matière première (2) fonctionne en alimentation et la vanne tout-ou-rien (8) est ouverte n'est pas égale à une deuxième valeur de seuil ou n'est pas inférieure à la deuxième valeur de seuil qui est réglée pour être inférieure à la première valeur de seuil, le module de commande (10) est configuré pour exécuter au moins l'une d'une commande consistant à déterminer une anomalie, d'une commande consistant à notifier un état ou une anomalie de l'appareil de génération d'hydrogène et d'une commande consistant à arrêter d'entraîner l'appareil de génération d'hydrogène.

3. Appareil de génération d'hydrogène selon la revendication 2,
où dans le cas où la valeur de pression détectée de l'unité de détection de pression (9) dans un état où le dispositif d'alimentation en matière première (2) fonctionne en alimentation et la vanne tout-ou-rien (8) est ouverte est supérieure ou égale à la première valeur de seuil, et la valeur de pression détectée de l'unité de détection de pression (9) après fermeture de la vanne tout-ou-rien (8) depuis l'état où le dispositif d'alimentation en matière première (2) fonctionne en alimentation et la vanne tout-ou-rien (8) est ouverte n'est pas inférieure à la première valeur de seuil, le module de commande (10) est configuré pour exécuter au moins une commande parmi une commande consistant à déterminer au moins une anomalie parmi une anomalie de l'éjecteur (7), une anomalie d'obstruction du circuit de gaz de recyclage (6) entre l'éjecteur (7) et l'unité de détection de pression (9) et une anomalie d'opération de fermeture de la vanne tout-ou-rien (8), une commande consistant à émettre une notification de l'état ou de l'anomalie de l'appareil de génération d'hydrogène, une commande d'arrêt de l'entraînement et d'empêchement de la réactivation.

4. Appareil de génération d'hydrogène selon la revendication 2,
où dans le cas où la valeur de pression détectée de l'unité de détection de pression (9) dans un état où le dispositif d'alimentation en matière première (2) fonctionne en alimentation et la vanne tout-ou-rien (8) est ouverte est supérieure ou égale à la première valeur de seuil, et la valeur de pression détectée de l'unité de détection de pression (9) après fermeture de la vanne tout-ou-rien (8) depuis l'état où le dispositif d'alimentation en matière première (2) fonctionne en alimentation et la vanne tout-ou-rien (8) est ouverte est inférieure à la première valeur de seuil mais n'est pas inférieure à la deuxième valeur de seuil, le module de commande (10) est configuré pour exécuter au moins une commande parmi une commande consistant à déterminer au moins une anomalie parmi une anomalie d'obstruction de l'éjecteur (7) par de l'eau, une anomalie mineure de l'éjecteur (7) et une anomalie d'opération de fermeture de la vanne tout-ou-rien (8), une commande consistant à émettre une notification de l'état ou de l'anomalie de l'appareil de génération d'hydrogène et une commande d'arrêt de l'entraînement.

5. Appareil de génération d'hydrogène selon la revendication 2,
où dans le cas où la valeur de pression détectée de l'unité de détection de pression (9) dans un état où le dispositif d'alimentation en matière première (2) fonctionne en alimentation et la vanne tout-ou-rien (8) est ouverte est inférieure à une troisième valeur de seuil qui est réglée pour être inférieure à la première valeur de seuil, le module de commande (10) est configuré pour exécuter au moins une commande parmi une commande consistant à déterminer au moins une anomalie parmi une anomalie d'obstruction du circuit de gaz de recyclage (6) en amont de l'unité de détection de pression (9) et une anomalie dans un état fermé de la vanne tout-ou-rien (8), une commande consistant à émettre une notification de l'état ou de l'anomalie de l'appareil de génération d'hydrogène, une commande consistant à arrêter l'entraînement et une commande consistant à empêcher la réactivation.

6. Appareil de génération d'hydrogène selon la revendication 2,
où dans le cas où la valeur de pression détectée de l'unité de détection de pression (9) dans un état où le dispositif d'alimentation en matière première (2) fonctionne en alimentation et la vanne tout-ou-rien (8) est ouverte est inférieure à la première valeur de seuil, et est supérieure à une troisième valeur de seuil qui est réglée pour être inférieure à la première valeur de seuil, le module de commande (10) est configuré pour exécuter au moins une commande parmi une commande consistant à déterminer au moins une anomalie parmi une anomalie d'obstruction mineure et une anomalie d'obstruction par de l'eau du circuit de gaz de recyclage (6) en amont de l'unité de détection de pression (9), et une anomalie dans un état fermé de la vanne tout-ou-rien (8), une commande consistant à émettre une notification de l'état ou de l'anomalie de l'appareil de génération d'hydrogène et une commande consistant à arrêter l'entraînement.

7. Appareil de génération d'hydrogène selon la revendication 1,
dans lequel l'unité de détection d'anomalie inclut une unité de détection de pression (9) configurée pour détecter une pression du circuit d'alimentation en matière première (3), et un module de commande (10),
dans le cas où une valeur de pression détectée de l'unité de détection de pression (9) dans un état où le dispositif d'alimentation en matière première (2) fonctionne en alimentation et la vanne tout-ou-rien (8) est ouverte est supérieure ou égale à une quatrième valeur de seuil, et dans le cas où une valeur de pression détectée de l'unité de détection de pression (9) après fermeture de la vanne tout-ou-rien (8) depuis l'état où le dispositif d'alimentation en matière première (2) fonctionne en alimentation et la vanne tout-ou-rien (8) est ouverte n'est pas inférieure à la quatrième valeur de seuil, le module de commande (10) est configuré pour exécuter au moins une commande parmi une commande consistant à déterminer qu'il s'agit d'une anomalie, une commande consistant à émettre une notification d'un état ou d'une anomalie de l'appareil de génération d'hydrogène et une commande consistant à arrêter l'entraînement de l'appareil de génération d'hydrogène.

8. Appareil de génération d'hydrogène selon l'une quelconque des revendications 2 à 7, dans lequel le module de commande (10) est configuré pour exécuter une commande consistant à fermer périodiquement la vanne tout-ou-rien (8) pendant l'entraînement de l'appareil de génération d'hydrogène.

9. Système de pile à combustible, comprenant :
l'appareil de génération d'hydrogène (100) selon l'une quelconque des revendications 1 à 8 ; et
une pile à combustible (11) configurée pour générer de l'électricité en utilisant le gaz contenant de l'hydrogène qui est produit dans l'appareil de génération d'hydrogène (100).

10. Procédé d'entraînement d'un appareil de génération d'hydrogène (100) comprenant un module d'hydrodésulfuration (1) configuré pour amener un composé soufré dans un gaz de matière première à réagir avec de l'hydrogène pour éliminer le composé soufré, un dispositif d'alimentation en gaz de matière première (2) configuré pour augmenter une pression du gaz de matière première et alimenter le module d'hydrodésulfuration (1) avec le gaz de matière première, un circuit d'alimentation en gaz de matière première (3) qui est fourni entre le dispositif d'alimentation en gaz de matière première (2) et le module d'hydrodésulfuration (1), un module de reformage (4) configuré pour générer un gaz contenant de l'hydrogène en utilisant un gaz de matière première qui traverse le module d'hydrodésulfuration (1), un circuit de gaz contenant de l'hydrogène (5) à travers lequel le gaz contenant de l'hydrogène est évacué du module de reformage (4), un circuit de gaz de recyclage (6) qui dévie une partie du gaz contenant de l'hydrogène, qui est évacué du module de reformage (4), du circuit de gaz contenant de l'hydrogène (5) pour mélanger le gaz contenant de l'hydrogène avec un gaz de matière première qui s'écoule dans le circuit d'alimentation en matière première (3), un éjecteur (7) qui est disposé au niveau d'une partie de jonction entre le circuit d'alimentation en matière première (3) et le circuit de gaz de recyclage (6), et une vanne tout-ou-rien (8) qui est fournie sur le circuit de gaz de recyclage (6), le procédé comprenant :
une étape de détection de pression consistant à détecter une pression du circuit d'alimentation en matière première (3), ou une pression du circuit de gaz de recyclage (6) en aval de la vanne tout-ou-rien (8) ; et
une étape de détection d'anomalie consistant à détecter une anomalie quand le gaz contenant de l'hydrogène n'est pas fourni normalement au module d'hydrodésulfuration (1) à travers le circuit de gaz de recyclage (6) sur la base de la pression du circuit d'alimentation en matière première (3) ou de la pression du circuit de gaz de recyclage (6) en aval de la vanne tout-ou-rien (8).

11. Procédé d'entraînement d'un appareil de génération d'hydrogène selon la revendication 10, où lors de l'étape de détection d'anomalie, dans le cas d'un état où le dispositif d'alimentation en matière première (2) fonctionne en alimentation et la vanne tout-ou-rien (8) est ouverte, la pression du circuit de gaz de recyclage (6) en aval de la vanne tout-ou-rien (8) est inférieure à une première valeur de seuil, ou dans le cas où une pression du circuit de gaz de recyclage (6) en aval de la vanne tout ou rien (8) après fermeture de la vanne tout-ou-rien (8) depuis l'état où le dispositif d'alimentation en matière première (2) fonctionne en alimentation et la vanne tout-ou-rien (8) est ouverte n'est pas égale à une deuxième valeur de seuil ou n'est pas inférieure à la seconde valeur de seuil qui est réglée pour être inférieure à la première valeur de seuil, l'une au moins d'une opération consistant à déterminer qu'il s'agit d'une anomalie, d'une opération consistant à émettre une notification d'un état ou d'une anomalie de l'appareil de génération d'hydrogène et d'une opération consistant à arrêter l'entraînement est effectuée.
